# EUROPÄISCHE PATENTSCHRIFT

(11) **EP 2 256 575 B1**
(45) Veröffentlichungstag und Bekanntmachung des Hinweises auf die Patenterteilung: **20.02.2013**
(21) Anmeldenummer: 10005338.8
(22) Anmeldetag: 21.05.2010
(51) Int. Cl.: G05D 9/02, B01D 17/02, E03F 5/16

(54) **Vorrichtung zum selbsttätigen Verschließen eines Zulaufes eines Behälters zur Aufnahme einer Flüssigkeit und Abscheidevorrichtung**
Device for self-actuated closing of an inflow of a container for holding a liquid and separation device
Dispositif de fermeture automatique d'une alimentation d'un récipient destiné à la réception d'un liquide et dispositif de séparation

(30) Priorität: 25.05.2009 DE 102009022543; 25.01.2010 DE 102010005778
(43) Veröffentlichungstag der Anmeldung: 01.12.2010
(73) Patentinhaber: Opanski, Josef Zoltan, 88339 Bad Waldsee (DE)
(72) Erfinder: Opanski, Josef Zoltan, 88339 Bad Waldsee (DE)
(74) Vertreter: Dobler, Markus

(56) Entgegenhaltungen:
- EP-A1- 0 368 084
- EP-A1- 0 619 131
- DE-U- 7 441 772
- DE-U1- 9 411 427
- US-A- 5 894 858

## Beschreibung

### Stand der Technik:

Es sind selbsttätige Verschließvorrichtungen für Behälter zur Aufnahme einer Flüssigkeit bzw. eines fließfähigen Stoffgemisches bekannt, wobei im bestimmungsgemäßen Einsatz des Behälters die Flüssigkeit dem Behälter über einen Zulauf zulaufen und zumindest ein überwiegender Teil davon über einen Ablauf den Behälter wieder verlassen kann. Unter einem Stoffgemisch wird insbesondere eine Flüssigkeit verstanden, in welcher ggf. Leichtflüssigkeiten, wie z. B. Benzin oder Öl, Schweb- und/oder Feststoffe mitgeführt werden. Nachfolgend wird anstelle des Begriffs "Stoffgemisch" vereinfachen auch von Flüssigkeit gesprochen, da die Flüssigkeit die Hauptkomponente des betrachteten Stoffgemisches darstellt, wobei das Vorhandensein von Leichtflüssigkeiten, Schweb-und/oder Feststoffen in dem als Flüssigkeit benannten Gemisch nicht ausgeschlossen ist.

Die Erfindung betrifft auch Abscheidevorrichtungen bzw. Behälter, insbesondere vergraben oder versenkt vorhandene Durchlaufbecken, Silos, Tanks oder Erdbehälter einer Abscheidereinrichtung. Solche Abscheiderbehälter, in denen insbesondere umweltgefährdende Flüssigkeiten, Fest- oder Schwebstoffe aus der Flüssigkeit bzw. dem Abwasser abgeschieden werden sollen, müssen für unterschiedliche in der Praxis mögliche Betriebsszenarien sicher ausgelegt sein. Insbesondere muss ein nicht betriebsgemäßes Austreten von Problemstoffen aus dem Behälter vermieden werden, insbesondere ein Problemstoffaustritt beispielsweise von Leichtflüssigkeit über eine ggf. im Behälterdeckel vorhandene Öffnung. Es ist daher zu vermeiden, dass Flüssigkeit im Behälter über ein im sachgemäßen Betrieb sich einstellendes Normalniveau der Anlage steigt bzw. diesen füllt. Dies kann z.B. auftreten, wenn Flüssigkeit über den Zulauf in den Behälter zufließt, jedoch nicht oder nicht in ausreichendem Maß über einen Ablauf des Behälters aus diesem abfließen kann, was als Aufstau bezeichnet wird und eintritt, wenn der Ablauf über einen selbsttätigen Ablaufverschluss geschlossen ist.

Bisherige Verschließvorrichtungen zum selbsttätigen Verschließen des Zulaufs des Behälters sind störanfällig bzw. können unter besonderen Betriebsbedingungen versagen.

Selbsttätige Verschließvorrichtungen für Flüssigkeitsabscheider sind aus den Dokumenten EP 0619131 A1 und DE 7441772 U bekannt.

### Aufgabe und Vorteile der Erfindung:

Aufgabe der vorliegenden Erfindung ist es, eingangs erläuterte Anordnungen bereitzustellen, welche gegenüber bisherigen Anordnungen verbessert sind, insbesondere im Hinblick auf ein zuverlässiges Verschließen eines Zulaufes eines Behälters im Praxisbetrieb.

Diese Aufgabe wird durch die unabhängigen Ansprüche gelöst.

In den abhängigen Ansprüchen sind vorteilhafte Weiterbildungen der Erfindung aufgezeigt.

Die Erfindung geht aus von einer Vorrichtung zum selbsttätigen Verschließen eines Zulaufes eines Behälters zur Aufnahme einer Flüssigkeit, die im Regelbetrieb des Behälters in einer Zuflussrichtung zunächst einen Zulaufabschnitt und anschließend eine Zulauföffnung bzw. eine Verschließstelle passiert und dem Behälter zufließt und Flüssigkeit über einen Ablauf mit einem definierten Ablaufniveau aus dem Behälter abfließt, wobei das selbsttätige Verschließen des Zulaufs bei einem Niveau der Flüssigkeit im Behälter erfolgt, das über dem Ablaufniveau des Ablaufs liegt, mit einem im Regelbetrieb in der Flüssigkeit schwimmfähigen Schwimm-Tauchkörper und mit Verschlussmitteln, die ein Verschlusselement umfassen, das abhängig von der Position des Schwimm-Tauchkörpers den Zulauf freigibt oder in einer Verschlussposition des Verschlusselements den Zulauf verschließt.

Der Kern der Erfindung liegt darin, dass die Verschlussmittel derart ausgebildet sind, dass das Verschlusselement im Zulaufabschnitt durch eine Bewegung in Zuflussrichtung die Zulauföffnung verschließt. Damit ist eine Anordnung geschaffen, welche zuverlässig und einfach im Hinblick auf ein absolut sicheres Verschließen des Zulaufes arbeitet. Insbesondere kann auch bei vergleichsweise sehr hohen zulaufseitig anstehenden hydraulischen Drücken das dichte Verschließen des Zulaufs gewährleistet werden. Dies ist über unterschiedlichste Ausbildungen des Verschlusselements im Zusammenspiel mit entsprechenden Gegenabschnitten im Zulaufabschnitt, mit denen das Verschlusselement zum Verschließen der Zulauföffnung zusammenwirkt, möglich.

Mit den vorgeschlagenen Verschlussmitteln lassen sich die eingangs genannten Probleme vermeiden. Insbesondere kann bei Abscheidevorrichtungen zum Beispiel bei Leichtflüssigkeitsabscheideranlagen sicher vermieden werden, dass Leichtflüssigkeit über eine Öffnung im Behälterdeckel, z. B. eine Inspektionsöffnung aus dem Behälter unkontrolliert austritt, wenn der Ablauf verschlossen ist und weiterhin Flüssigkeit über den Zulauf in den Behälter zufließt.

Der Einsatz von Schwimm-Tauchkörpern ist vom zugrundeliegenden Arbeitsprinzip grundsätzlich verschieden zu anderen Kontrollelementen wie insbesondere unter Einsatz eines Schwimmers. Ein Schwimmer weist insbesondere eine konstante Schwimmfähigkeit auf, wohingegen der Schwimm-Tauchkörper ein stark variierendes Verhalten in der Flüssigkeit zeigt, also ein Schwimm- oder Sinkverhalten zeigen kann. Ein Wechsel vom schwimmenden Zustand zu einem sinkenden Verhalten kann schlagartig oder in einem langsamen Übergang erfolgen. Die Verwendung eines Schwimm-Tauchkörpers in einer Verschließvorrichtung macht völlig andere konstruktive und/oder verfahrenstechnische Überlegungen notwendig, als bei einem Einsatz eines Schwimmers.

Vorteilhafterweise umfassen die Verschlussmittel einen im Zulauf in Zuflussrichtung sich verjüngenden Abschnitt, der auf einen Gegenabschnitt des Verschlusselements abgestimmt ist, so dass in der Verschlussposition die Zulauföffnung durch das Verschlusselement dicht verschlossen ist. Die Verschlussposition wird insbesondere durch ein formschlüssiges Eingreifen des Verschlusselements an Gegenabschnitten erreicht, womit im Bereich der Zulauföffnung das Verschlusselement einen Durchlassquerschnitt zusetzt und damit die Zulauföffnung selbst oder einen davon etwas beabstandeten Zulaufquerschnitt blockiert. Der verjüngende Abschnitt im Zulauf, beispielsweise an einem insbesondere nach unten bzw. vertikal ausgerichteten Fallrohr oder einer Zulaufleitung ist insbesondere exakt auf das Verschlusselement bzw. auf dessen Eingreifabschnitt abgestimmt. Neben einem absolut dichten Abschließen des Zulaufes ist die konische bzw. verjüngende Ausbildung von Verschlusselement und verjüngendem Abschnitt vorteilhaft im Hinblick auf bereitgestellte Führungsflächen für das Verschlusselement bzw. minimiert eine Verkantungsgefahr des Verschlusselements.

Insbesondere ist es bisher nicht möglich, den Zulauf absolut sicher zu verschließen, da im Bereich der Zulauföffnung, welche verschlossen werden soll, Verschmutzungen und Ablagerungen von Feststoffen ein dichtes Verschließen mit einem Verschlusskörper nicht möglich macht.

Der sich verjüngende Abschnitt des Zulaufes stellt eine Strömungsengestelle der Zulaufseite dar, womit durch die dort entsprechend erhöhte Strömungsgeschwindigkeit die Strömungsengstelle im Zuflussbetrieb regelmäßig durch das ankommende Flüssigkeitsgemisch oder das Abwasser gespült wird. Mitgeführte Fracht, wie Steine, Sand und anderer Schweb- oder Sinkschmutz werden vom sich verjüngenden Abschnitt absolut sicher ferngehalten. Für einen dennoch ausreichend großen Durchmesser der Zulauföffnung kann der Zulaufabschnitt vor dem verjüngenden Abschnitt größer dimensioniert werden. Zum Beispiel kann an ein horizontales Zulaufrohr in den Behälter im Behälter ein nach unten mit dem verjüngenden Abschnitt offenes Fallrohr anschließen, das einen größeren Durchmesser aufweist, als das Zulaufrohr. Der Durchlass-Durchmesser einer Zulauföffnung des Fallrohrs in ein Behälterinneres kann in etwa dem Durchlass-Durchmesser des Zulaufrohrs entsprechen.

Bevorzugt ist der Schwimm-Tauchkörper starr mit dem Verschlusselement gekoppelt. So kann stabil und zuverlässig abhängig von der Position des Schwimm-Tauchkörpers das Verschlusselement in eine definierte dazugehörige Position gebracht werden. Vorteilhaft wird abhängig von der Situation im Behälter, die sich in der Position des Schwimm-Tauchkörpers ausdrückt, was wiederum von dem Flüssigkeitsniveau im Behälter bzw. einem Aufstauniveau der Flüssigkeit abhängt, die Verschließvorrichtung für den Zulauf des Behälters gesteuert. Die Steuerung funktioniert in beide Richtungen, so dass durch Absinken des Schwimm-Tauchkörpers das Verschlusselement sich in Zuflussrichtung bewegt und den Zulauf kontinuierlich verschließt und bei Ansteigen des Schwimm-Tauchkörpers das Verschlusselement sich gegen die Zuflussrichtung bewegt, also den Zulauf öffnet.

Ein weiterer wesentlicher Aspekt der Erfindung liegt darin, dass Arretiermittel mit einem Arretierelement derart ausgebildet sind, dass nach dem Erreichen der Verschlussposition durch das Verschlusselement durch ein weitergehendes Absinken des Schwimm-Tauchkörpers das Arretierelement in eine Arretierstellung bringbar ist, in welcher das Verschlusselement in der Verschlussposition gesichert ist. Mit dieser Anordnung wird neben einem sicheren Verschließen der Zulauföffnung das Verschlusselement in der Verschlussposition auch verriegelt bzw. versperrt. Das Verschlusselement kann somit erst dann die Verschlussposition wieder verlassen, wenn ein gezieltes Entriegeln z. B. über geeignete Entriegelungsmittel erfolgt ist. Dies kann z. B. durch eine autorisierte Person vorgenommen werden.

Weiter wird vorgeschlagen, dass der Schwimm-Tauchkörper über eine Seilzuganordnung mit dem Verschlusselement gekoppelt ist. Dies ist eine mechanisch robuste, platzsparende und für Verschmutzungen kaum Angriffsfläche bietende Anordnung, um die Bewegung des Schwimm-Tauchkörper mit der des Verschlusselements zu koppeln. Auch bei räumlich schwierigen Gegebenheiten lässt sich z. B. durch Umlenkungen eines Seilelements der Seilzuganordnung die Kopplung zwischen Schwimm-Tauchkörper und Verschlusselement realisieren. Besonders vorteilhaft ist es, wenn auch die Arretiermittel über die Seilzuganordnung mit dem Schwimm-Tauchkörper gekoppelt sind. So kann mit der gleichen Mechanik, nachdem das Verschlusselement die Verschlussposition erreicht hat, gezielt das Arretierelement in die Arretierstellung gebracht werden.

Bevorzugt ist das Arretierelement an einem Grundkörper des Verschlusselements bewegbar aufgenommen. Somit wird das Arretierelement unverlierbar an einem Grundkörper des Verschlusselements bzw. an diesem bewegbar gehalten.

Weiter wird vorgeschlagen, dass der Schwimm-Tauchkörper becherartig mit einer nach oben gerichteten Schwimm-Tauchkörperöffnung ausgebildet ist. Somit kann dem Schwimm-Tauchkörper auf einfache Weise eine gewünschte Schwimmfähigkeit bzw. eine Auftriebswirkung im leeren Zustand bei einem leeren Aufnahmevolumen des Schwimm-Tauchkörpers vorgegeben werden. Außerdem ist der Schwimm-Tauchkörper robust, platzsparend und wirtschaftlich herstellbar.

Der Schwimm-Tauchkörper ist bevorzugt rohrförmig mit einer oben offenen und unten geschlossenen bzw. becherartigen hohlen Wandung.

Über einen Rand der Schwimm-Tauchkörperöffnung kann bei entsprechenden Betriebssituationen bzw. konstruktiv vorgebbar durch in den Behälter weiter zufließende Flüssigkeit in den noch schwimmenden Schwimm-Tauchkörper Flüssigkeit hineinfließen und abhängig von einem Füllgrad eines Aufnahmevolumens des Schwimm-Tauchkörpers bzw. von der Dichte der Flüssigkeit absinken.

Es ist über dies vorteilhaft, dass eine betätigbare Ventilanordnung zum Durchlass einer in dem Zulaufabschnitt in der Verschlussposition anstehenden Flüssigkeit in den Behälter vorgesehen ist. Die betätigbare Ventilanordnung, die z. b. in einer Wand im Zulaufabschnitt integriert ist, dient dazu, eine im Zulaufabschnitt angestaute Flüssigkeit, wenn die Verschlussmittel die Zulauföffnung verschlossen haben, in den Behälter abzulassen. Dies ist insbesondere für eine Wiederherstellung eines Inbetriebnahmezustandes nötig, nach einem Aufstau im Behälter bzw. wenn die Verschlussmittel den Zulauf verschlossen haben und der Behälter anschließend entleert wurde. Die zulaufseitig am Verschlusselement anstehende Flüssigkeit kann dann bei geschlossener Zulauföffnung in den Behälter fließen. Damit steht auch vom Zulaufabschnitt kein Druck mehr am Verschlusselement an, so dass es aus der Verschlussstellung ohne Weiteres freikommen kann.

In einer vorteilhaften Ausführungsform des Erfindungsgegenstandes sind Führungsmittel vorgesehen, welche die Bewegung des Schwimm-Tauchkörpers in vertikaler Richtung vorgebbar begrenzen. Der Schwimm-Tauchkörper kann sich in der Regel entlang einer definierten Strecke im Behälter hin- und herbewegen. Damit kann ein gewünschter Bewegungsweg für den Schwimm-Tauchkörper exakt nach oben und unten vorgegeben werden. Der Schwimmkörper wird zudem in einem geeigneten Bereich im Behälterinneren, also in einem von Strömungsvorgängen bzw. Turbulenzen weniger beeinflussten Beruhigungsbereich, entlang der Führungsmittel geführt bewegt.

Die Führungsmittel umfassen beispielsweise eine Kulissenführung und/oder eine schienenartige Zweipunktführung.

Weiter wird vorgeschlagen, dass eine Auslassanordnung zum Ablassen von in dem Schwimm-Tauchkörper aufgenommener Flüssigkeit vorhanden ist. Um nach einem Einfließen von Flüssigkeit in das Aufnahmevolumen des Schwimm-Tauchkörpers, der durch das Absinken vollständig gefüllt ist, den Schwimm-Tauchkörper wieder schwimmfähig zu machen bzw. für den Standard- bzw. Normalbetrieb in einen Startzustand zu bringen, ist die Auslassanordnung vorzusehen. Insbesondere können Einwirkmittel vorgesehen sein, um die Auslassanordnung von außerhalb des Behälters zu öffnen, was beispielsweise durch eine oben im Behälter befindliche Behälteröffnung erfolgen kann. Für ein Ablaufen der Flüssigkeit aus dem Schwimm-Tauchkörper wird in der Regel das Flüssigkeitsniveau im Behälter vorher entsprechend weit abgesenkt, so dass der Schwimm-Tauchkörper bzw. dessen Auslauföffnung oberhalb des Behälter-Flüssigkeitsniveaus liegt.

Erfindungsgemäß umfasst der Schwimm-Tauchkörper formveränderbare Auftriebmittel, welche mit einem Gas befüllbar sind, so dass der Schwimm-Tauchkörper in der Flüssigkeit im Behälter schwimmfähig ist, wobei der Schwimm-Tauchkörper durch ein betriebsgemäßes Ablassen zumindest eines Teils des Gases aus den Auftriebmitteln in der Flüssigkeit absenkbar ist. Damit wird eine vorteilhafte Variante des Schwimm-Tauchkörpers bereitgestellt.

Weiter ist es vorteilhaft, dass ein in der Flüssigkeit schwimmfähiges Steuerungselement vorhanden ist, welches abhängig von einem Flüssigkeitsniveau in dem Behälter ein Ablassen des Gases aus den Auftriebmitteln bewirkt. So kann eine Steuerung der Position des Schwimm-Tauchkörpers sicher und über eine zum Schwimm-Tauchkörper separate Anordnung realisiert werden.

Schließlich ist es bevorzugt, dass die Verschlussmittel derart ausgebildet sind, dass bei einem im Behälter herrschenden Flüssigkeitsniveau, das dem definierten Ablaufniveau entspricht, wobei ein Anteil der Flüssigkeit eine Leichtflüssigkeit umfasst, welche oberhalb einer weiteren Flüssigkeit aufschwimmt, der Schwimm-Tauchkörper durch Aufnahme von Leichtflüssigkeit seine Schwimmfähigkeit in der Flüssigkeit verringert und absinkt und im Behälter in der Flüssigkeit eintaucht, so dass mit dem Verschlusselement der Zulauf selbsttätig verschließbar ist. Der Schwimm-Tauchkörper ist so austariert, dass er auf der weiteren Flüssigkeit, z. B. einem wässrigen Abwasseranteil aufschwimmt, jedoch in der darüber liegenden Leichtflüssigkeit sinkt. So kann es eingerichtet werden, dass im Normalbetrieb bei Erreichen einer maximal tolerierbaren Leichtflüssigkeitsschicht in dem Behälter, insbesondere einer Abscheideranlage für Leichtflüssigkeit, der Zulauf verschlossen wird. Denn mit dem Einfließen von Leichtflüssigkeit in den Schwimm-Tauchkörper sinkt dieser nach unten und verschließt den Zulauf. Nun kann der Behälter entleert bzw. danach wieder in Betrieb genommen werden. Vorteilhafterweise kann mit dem entsprechenden Schwimm-Tauchkörper auf einen ansonsten notwendigen zusätzlichen selbsttätigen Verschluss des Ablaufs verzichtet werden.

Die Erfindung bezieht sich insbesondere auch auf eine Vorrichtung zum Abscheiden einer Flüssigkeitskomponente aus einer Flüssigkeit, insbesondere Leichtflüssigkeitsabscheider, welcher eine der vorgenannten Vorrichtungen aufweist. Damit lassen sich für eine entsprechende Abscheidevorrichtung die genannten Vorteile erzielen.

Besonders vorteilhaft ist es, wenn die vorgeschlagene Abscheidevorrichtung zusätzlich mit einer selbsttätigen schwimmerbetätigbaren Ablaufverschließvorrichtung mit einer Rückstausicherung und einer Anordnung zum Verschließen einer Behälteröffnung zu einem darüber liegenden Bereich bzw. einem Schacht ausgestattet ist. Mit einer solchen Anordnung lassen sich alle relevanten kritischen Betriebssituationen ausschließen bzw. sicher erkennen und beheben.

### Figurenbeschreibung:

Weiterer Merkmale und Vorteile der Erfindung sind anhand der in den Figuren stark schematisiert dargestellten Ausführungsbeispiele näher erläutert.

Im Einzelnen zeigt:
- Figur 1: einen teils geschnitten dargestellten Ausschnitt einer Abscheideranlage mit einer herkömmlichen Verschließvorrichtung in Offenstellung für einen Zulauf der Abscheideranlage in Seitenansicht,
- Figur 2: die Anordnung gemäß Figur 1 ohne eine Wandung der Abscheideranlage in einer Frontansicht,
- Figur 3: die Anordnung gemäß Figur 1 in Geschlossenstellung der Verschließvorrichtung,
- Figur 4: die Anordnung gemäß Figur 3 ohne Wandung der Abscheideranlage in einer Frontansicht,
- Figur 5: die Anordnung gemäß Figur 3 mit geöffneter Ablassanordnung,
- Figur 5a: ein Bauteil der Verschließvorrichtung in Einzeldarstellung in perspektivischer Ansicht,
- Figur 6: die Ablassanordnung gemäß Figur 5 in vergrößerter Detaildarstellung,
- Figur 7: eine herkömmliche Abscheideranlage im Schnitt mit einer weiteren erfindungsgemäßen Verschließvorrichtung in offener Stellung,
- Figur 8 bis 11: verschiedene Zustände der Verschließvorrichtung gemäß Figur 8 bei einer Aufstausituation,
- Figur 12: einen herkömmlichen Schwimm-Tauchkörper gemäß der Figuren 7 bis 11 mit einer dargestellten Auslassanordnung,
- Figur 13: die Auslassanordnung gemäß Figur 12 in vergrößerter Darstellung,
- Figur 14 bis 16: einen Ausschnitt aus einem herkömmlichen Abscheidebehälter mit einer Verschließvorrichtung in drei unterschiedlichen Betriebszuständen,
- Figur 17 bis 22: eine erfindungsgemäße Verschließvorrichtung in einem Behälter jeweils ausschnittsweise in einer Seitenansicht und einer dazu um 90 Grad gedrehten Ansicht,
- Figur 23 bis 26: eine weitere erfindungsgemäße Ausführungsform einer Verschließvorrichtung in einem Behälter jeweils ausschnittsweise in einer Seitenansicht und einer dazu um 90 Grad gedrehten Ansicht in zwei unterschiedlichen Betriebszuständen und
- Figur 27: eine weitere erfindungsgemäße Ausführungsform einer Verschließvorrichtung in einem Behälter.

Sich entsprechende Elemente der in den Figuren gezeigten Anordnungen von unterschiedlichen Ausführungsbeispielen sind teilweise mit den gleichen Bezugszeichen versehen.

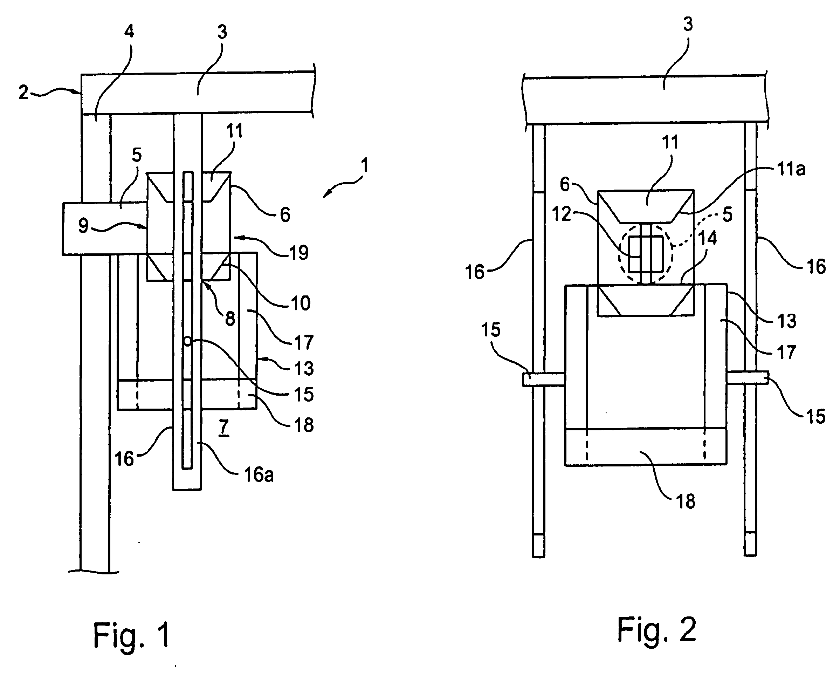

Figur 1 zeigt eine herkömmliche selbsttätige Verschließvorrichtung 1 für einen zu einer Abscheideranlage gehörenden Behälter 2, von dem nur ausschnittsweise ein Deckelelement 3 und eine Wandung 4 dargestellt ist. Ein in etwa horizontal verlaufendes Zulaufrohr 5 durchgreift dicht die Wandung 4 im Bereich etwas unterhalb des Deckelelements 3. Mit in etwa doppeltem Durchmesser zum Zulaufrohr 5 schließt sich daran ein Fallrohr 6 an, welches als Strömungsverteiler für eine einem Behälterinneren 7 zufließende Flüssigkeit dient. Das Fallrohr 6 ist nach unten über eine Zulauföffnung 8 offen, durch welche Flüssigkeit, nachdem es innen einen Schwimm-Tauchkörper 13 passiert hat, in das Behälterinnere 7 gelangen kann.

Im Bereich eines durch das Zulaufrohr 5 und das Fallrohr 6 gebildeten Zulaufabschnitts 9, in Strömungsrichtung vor der Zulauföffnung 8, ist ein sich konisch verjüngender Abschnitt 10 ausgebildet. Der Abschnitt 10 bildet eine Strömungsengstelle, womit mögliche Ablagerungen aus dem zulaufenden Abwassergemisch in diesem Bereich durch erhöhte Strömungsgeschwindigkeiten vermieden werden. Der Abschnitt 10 ist daher vorteilhaft als ein Ventilsitz eines Verschlusselements 11 der Verschließvorrichtung 1 geeignet. Über ein Abstandelement bzw. eine vertikale Stange 12 (siehe Figur 2) ist das Verschlusselement 11 mit einem Quersteg 14 oben an dem Schwimm-Tauchkörper 13 fest verbunden. Der Schwimm-Tauchkörper 13 ist oben und unten offen ausgebildet. Das Verschlusselement 11 ist mit seiner Außenform exakt auf den konisch sich verjüngenden Abschnitt 10 dahingehend abgestimmt, dass durch ein nach unten Bewegen des Verschlusselements 11, was weiter unten noch erläutert wird, ein entsprechender konisch sich verjüngender Außenabschnitt 11a des Verschlusselements 11 in den sich verjüngenden Abschnitt 10 dicht anpresst.

Gegenüberliegend außen am Schwimm-Tauchkörper 13, der z. B. eine zylindrische Außenform zeigt, sind Führungsbolzen 15 angeordnet, die in jeweils einer Führungsnut 16a von Führungslaschen 16 beweglich geführt sind. Mit den Führungsnuten 16a ist ein Bewegungsweg des Schwimm-Tauchkörpers 13 in vertikaler Richtung festgelegt. Die Führungslaschen 16 sind an dem Deckelelement 3 befestigt und etwas mit Abstand zur Außenseite des Schwimm-Tauchkörper 13 positioniert.

Der Schwimm-Tauchkörper 13 weist einen oben offenen und unten geschlossenen doppelwandigen Wandabschnitt 17 auf und ist so austariert, dass er eine gewünschte Schwimmfähigkeit bzw. Auftriebswirkung in einem Abwassergemisch besitzt. Der Wandabschnitt 17 ist mit einer unten am Schwimm-Tauchkörper 13 vorhandenen ringförmigen Bodenscheibe 18 verbunden, die aus einem Material mit hoher Dichte gebildet ist. Die Bodenscheibe 18 ist insbesondere ausgestaltet, um ein ausreichend hohes Eigengewicht des Schwimm-Tauchkörpers 13 zu erreichen.

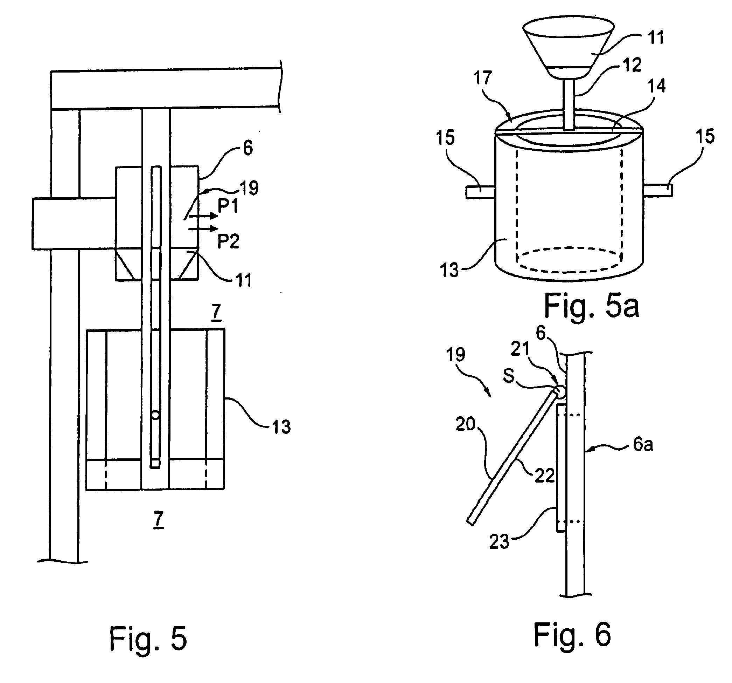

Im Fallrohr 6 ist auf einer dem Zulaufrohr 5 gegenüberliegenden Seite eine Ventilanordnung 19 vorgesehen. Die Ventilanordnung 19 ist in Figur 6 vergrößert bzw. näher dargestellt. Bei verschlossener Zulauföffnung 8, z. B. nach einem Leerpumpen des Behälters 2, kann über die manuell in die offene Stellung gebrachte Ventilanordnung 19 (siehe Figur 5) eine sich im Zulaufabschnitt 9 angestaute Flüssigkeit in das Behälterinnere 7 abgelassen werden, was durch Pfeile P1 angedeutet ist. Dies führt zu einer zulaufseitigen Druckentlastung.

Die Verschließvorrichtung 1 ist in Figur 1 und Figur 2 in der offenen Stellung gezeigt, so dass über die offene Zulauföffnung 8 Flüssigkeit in das Behälterinnere 7 gelangen kann. Dabei schwimmt der Schwimm-Tauchkörper 13 mit dem leeren bzw. ungefüllten doppelwandigen Wandabschnitt 17 in einer in Figur 1 bis 5 nicht dargestellten Flüssigkeit im Behälterinneren 7. Nach oben ist die Verfahrbarkeit des Schwimm-Tauchkörpers 13 durch Anschlagen des Verschlusselements 11 an dem Fallrohr 6 begrenzt.

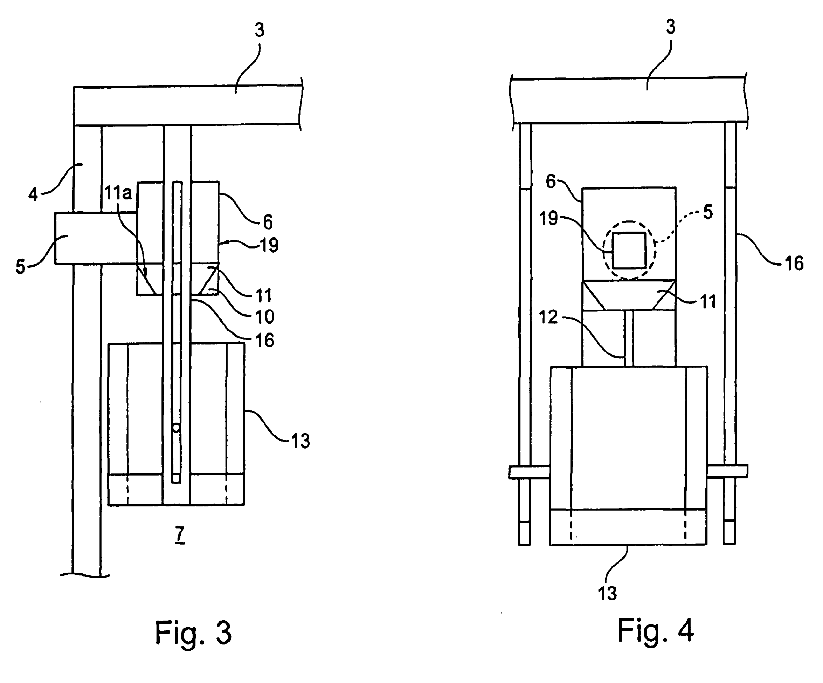

Figur 3 und Figur 4 zeigen die Verschließvorrichtung 1 in der geschlossenen Position, wobei das Verschlusselement 11 mit seinem konisch sich nach unten verjüngenden Außenabschnitt 11a dicht an den konisch sich verjüngenden Abschnitt 10 unten im Fallrohr 6 angepresst wird und damit die Zulauföffnung 8 dicht für zulaufseitig ankommende Flüssigkeit verschlossen ist. Der Schwimm-Tauchkörper 13 ist dabei gegenüber der Offenstellung gemäß Figur 1 und 2 nach unten durch Absinken versetzt. Der Wandabschnitt 17 ist mit Flüssigkeit gefüllt. Dabei ist auch die Ventilanordnung 19 geschlossen, wobei im Fallrohr 6 anstehende Flüssigkeit die Ventilanordnung 19 in die geschlossene Stellung drückt.

Figur 5 zeigt die geschlossene Verschließvorrichtung 1 bei offener Ventilanordnung 19, so dass aus dem Zulaufabschnitt 9 angestaute Flüssigkeit über die manuell geöffnete Ventilanordnung 19 in das Behälterinnere 7 gemäß der Pfeile P1 im Zulaufabschnitt 9 fließen kann.

In Figur 5a ist die Verbindung des Verschlusselements 11 mit dem Schwimm-Tauchkörper 13 ersichtlich. Außerdem ist die endseitig jeweils offene Rohrform des Schwimm-Tauchkörpers 13 zu erkennen.

Figur 6 zeigt die Ventilanordnung 19 in vergrößerter Darstellung. Die Ventilanordnung 19 umfasst eine schwenkbar um eine Achse S eines Gelenkes 21 gelagerte Klappe 20, welche eine Öffnung 6a im Fallrohr 6 verschließen kann. Das Gelenk 21 ist innen im Fallrohr 6 angeordnet. Für ein dichtes Verschließen der Ventilanordnung 19 ist auf der Innenseite der Klappe 20 eine Gummidichtung 22 vorhanden. Im geschlossenen Zustand der Ventilanordnung 19 wird durch den zulaufseitig an der Klappe 20 anstehenden hydraulischen Druck die Klappe 20 mit der Gummidichtung 22 gegen einen Ventilsitz 23 dicht angedrückt. Mit höherem hydraulischem Druck im Zulaufabschnitt wird die Klappe 20 stärker gegen den Ventilsitz 23 gedrückt.

Die Ventilanordnung 19 kann durch Drücken auf die Klappe 20 vom Behälterinneren 7 aus geöffnet werden.

Um den Schwimm-Tauchkörper 13 mit flüssigkeitsgefülltem Wandabschnitt 17 wieder in einen schwimmfähigen Zustand zu bringen, kann ein Innenvolumen des Wandabschnitts 17 durch z. B. Absaugen von der Flüssigkeit befreit werden. Alternativ kann in dem Innenvolumen des Wandabschnitts 17 auch ein aufblasbares Gummikissen (nicht dargestellt) installiert werden, welches durch einen Druckluftschlauch von außerhalb des Behälters 2 aufgeblasen werden kann, so dass Flüssigkeit im Innenvolumen des Wandabschnitts 17 verdrängt wird. Danach wird die Luft aus dem Gummikissen wieder abgelassen und das Gummikissen liegt flach auf dem Boden des Wandabschnitts 17.

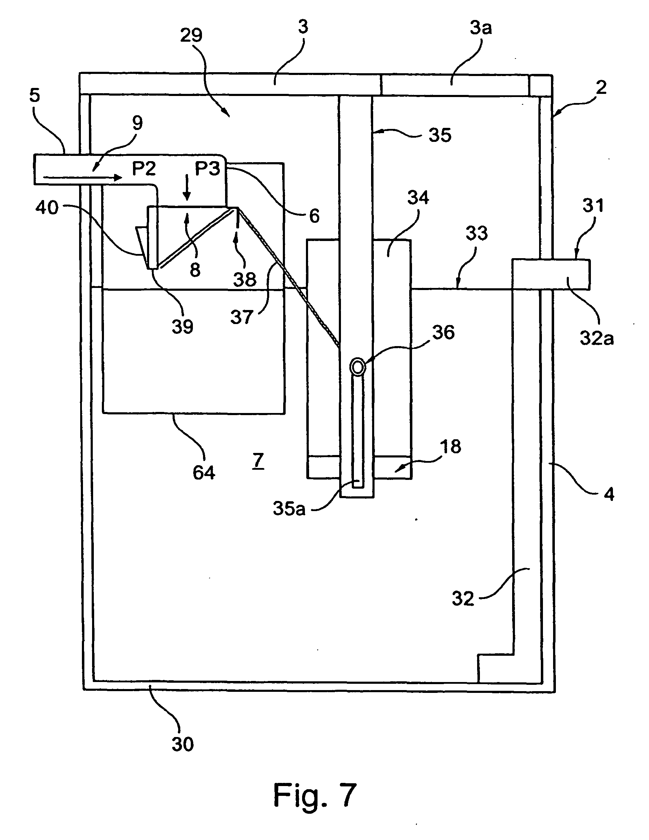

In den Figuren 7 bis 11 ist eine weitere herkömmliche Verschließvorrichtung 29 gezeigt, welche einen Schwimm-Tauchkörper 34 umfasst, der oben offen und unten mit einer geschlossenen Bodenscheibe 18 verschlossen bzw. becherartig aufgebaut ist. Der Schwimm-Tauchkörper 34 besitzt außerdem keine hohle Wand. Die Verschließvorrichtung 29 ist in einem Behälter 2 eines Leichtflüssigkeitsabscheiders integriert. Der Behälter 2 umfasst ein Deckelelement 3 mit einer Öffnung 3a, eine Wandung 4 und einen Boden 30. In den Behälter 2 kann Abwasser durch ein Zulaufrohr 5 und ein nach unten offenes Fallrohr 6 durch eine Zulauföffnung 8 in das Behälterinnere 7 fließen. Außerdem ist um das Zulaufrohr 5 und das Fallrohr 6 herum eine nach unten offene Verteilervorrichtung 64 vorgesehen. Für einen kontrollierten Abfluss aus dem Behälterinneren 7 ist ein Ablauf 31 mit einem Ablaufrohr 32 vorgesehen, das sich von einer Öffnung unten im Behälterinneren 7 an der Wandung 4 entlang nach oben erstreckt und über ein Austrittsabschnitt 32a durch die Wandung 4 nach außen tritt.

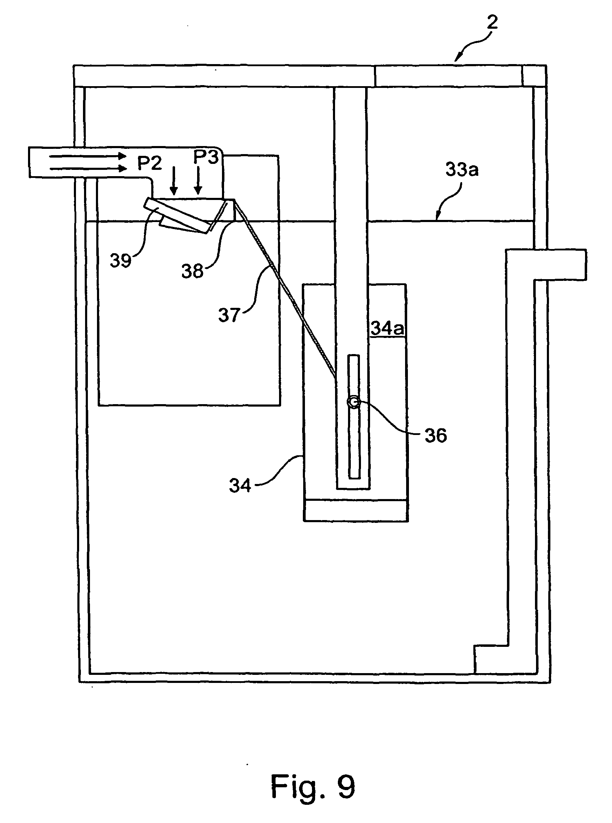

Ein selbsttätiger Schwimmerverschluss des Ablaufrohrs 32 und eine Ventilanordnung zum Verschließen der Öffnung 3a gegen unerwünschtes Eindringen von Fremdwasser von außen in den Behälter 2 sind in den Figuren 9 bis 13 nicht dargestellt.

Figur 7 zeigt einen Betriebszustand im Normalbetrieb des Leichtflüssigkeitsabscheiders, wobei sich nach dem Prinzip der kommunizierenden Röhren durch das Ablaufniveau des Ablaufs 31 ein Flüssigkeitsniveau 33 im Behälterinneren 7 einstellt. Die Verschließvorrichtung 29 befindet sich in ihrer geöffneten Stellung. Der leere Schwimm-Tauchkörper 34 der Verschließvorrichtung 29 ist über eine Führungsschiene 35, welche sich am Deckelelement 3 nach unten senkrecht erstreckt, in vertikaler Richtung gemäß einer Führungsnut 35a in der Führungsschiene 35 bewegbar. Die Führung bzw. Aufhängung des Schwimm-Tauchkörpers 34 erfolgt über zwei außen an gegenüberliegenden Seiten des Schwimm-Tauchkörpers 34 fest positionierten Führungsbolzen 36, die in der Führungsnut 35a bewegbar aufgenommen sind. Über ein am Schwimm-Tauchkörper 34 befestigtes Steuerseil 37 ist der Schwimm-Tauchkörper 34 über eine Umlenkanordnung 38 am unteren Rand des Fallrohrs 6 mit einer Zulaufsperrklappe 39 verbunden. Die Zulaufsperrklappe 39 ist gegenüberliegend zur Umlenkvorrichtung 38 ebenfalls am unteren Rand des Fallrohrs 6 gelenkig aufgenommen.

Außerdem ist ein Arretierungskeil 40 verschieblich an einer Außenseite der Zulaufsperrklappe 39 aufgenommen.

Bei maximal nach oben verschobenem Schwimm-Tauchkörper 34 gibt die Zulaufsperrklappe 39 die Zulauföffnung 8 vollständig frei und ist beispielsweise rechtwinklig zu einer durch die Zulauföffnung 8 gebildeten Ebene nach unten weggeklappt. Dem Behälter 2 fließt über das Zulaufrohr 5, das Fallrohr 6 und die offene Zulauföffnung 8 Flüssigkeit gemäß der Pfeile P2 und P3 (siehe z. B. Figur 7) zu. Über den Ablauf 31 verlässt Flüssigkeit den Behälter 2. Die im Behälter 2 vorhandene Flüssigkeit kann eine oben schwimmende Leichtflüssigkeit aufweisen (nicht gezeigt in Figur 7 bis 11).

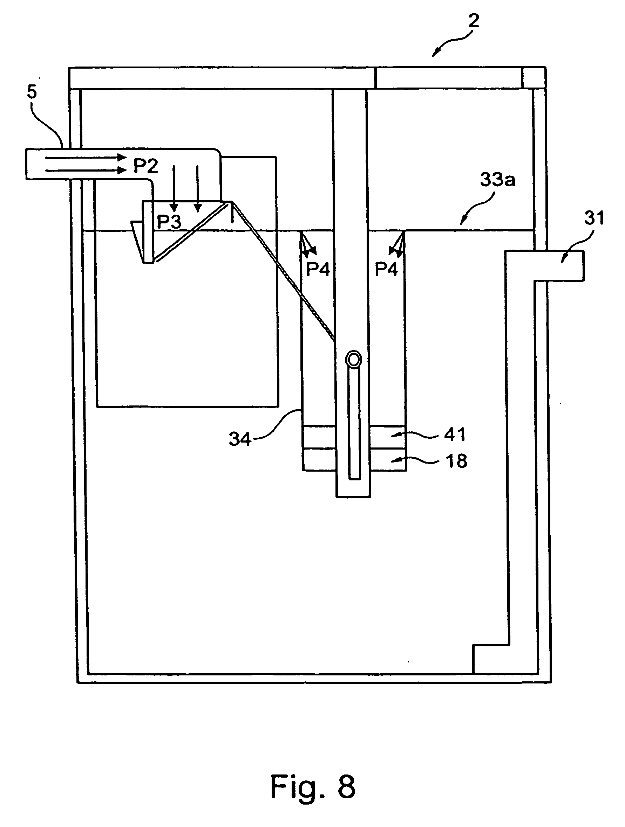

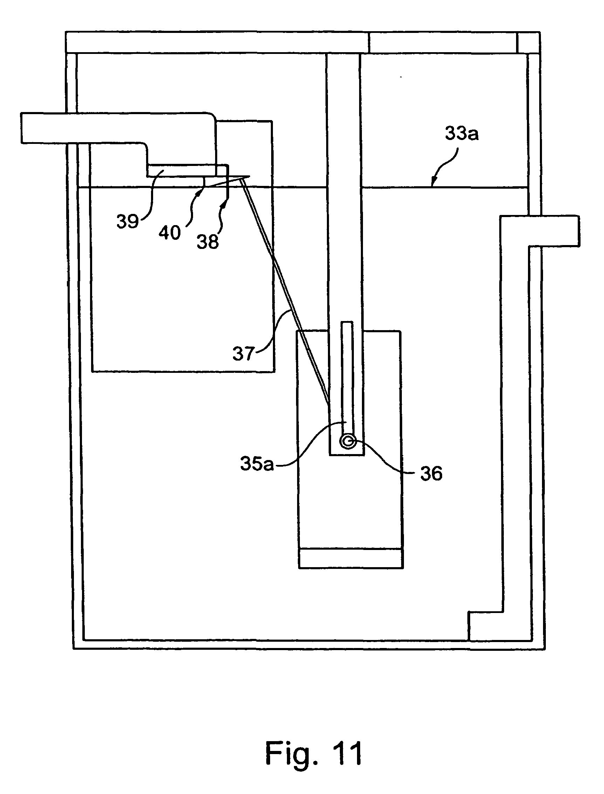

Figur 8 zeigt eine Aufstausituation im Behälter, wonach kein oder kein ausreichendes Abfließen von Flüssigkeit aus dem Behälter 2 möglich ist und Abwasser gemäß der Pfeile P2, P3 in den Behälter 2 zufließt, so dass sich ein Flüssigkeitsniveau 33a einstellt, welches über dem Flüssigkeitsniveau 33 bei freiem Ablauf 31 gemäß Figur 7 liegt. Bei dem Flüssigkeitsniveau 33a gelangt Flüssigkeit von oben in den becherartigen Schwimm-Tauchkörper 34 gemäß der Pfeile P4 ins Innere des Schwimm-Tauchkörpers 34, so dass darin sich Flüssigkeit 41 oberhalb der Bodenscheibe 18 im Schwimm-Tauchkörper 34 ansammelt. Mit dem Einfließen von Flüssigkeit in den Schwimm-Tauchkörper 34 sinkt der Schwimm-Tauchkörper 34 in der Flüssigkeit im Behälter 2 nach unten ab (siehe Figur 9 bis 11). Gemäß Figur 11 befindet sich der Schwimm-Tauchkörper 34 in seiner maximal nach unten versetzten Position gemäß der unteren Begrenzung der Führungsnut 35.

Bei entsprechenden Verhältnissen erfolgt ein Absinken des Schwimm-Tauchkörpers 13 gemäß der Figuren 1 bis 5, wobei ab einem im Behälter 2 herrschenden Flüssigkeitsniveau, das eine Oberkante des Schwimm-Tauchkörpers 13 zumindest erreicht, Flüssigkeit in den bis dahin leeren Wandabschnitt 17 des in seiner obersten Position befindlichen Schwimm-Tauchkörpers 13 einfließt und nach und nach füllt, so dass in der Folge der Schwimm-Tauchkörper 13 aufgrund der zusätzlichen Masse der eingeflossenen Flüssigkeit absinkt.

Das Absinken des Schwimm-Tauchkörpers 34 erfolgt so schnell, dass bevor das Flüssigkeitsniveau 33a die Zulauföffnung 8 von unten erreichen kann und über das Zulaufrohr 5 ausfließen kann, die Zulaufsperrklappe 39 die Zulauföffnung 8 schließt und in dieser Stellung arretiert wird. Mit der Arretierung kann vorteilhaft die behälterseitig schließende Zulaufsperrklappe 39 absolut sicher in der Schließstellung gehalten werden, auch bei vergleichsweise hohen hydraulischen Drücken von der Zulaufseite her.

Gemäß Figur 9 ist ein Innenvolumen 34a des Schwimm-Tauchkörpers 34 vollständig mit Flüssigkeit gefüllt und der Schwimm-Tauchkörpers 34 bereits etwas nach unten abgesunken. Über das Steuerseil 37 und die Umlenkvorrichtung 38 gekoppelt ist die Zulaufsperrklappe 39 in eine etwas näher zur Zulauföffnung 8 hin bewegten Stellung gezogen.

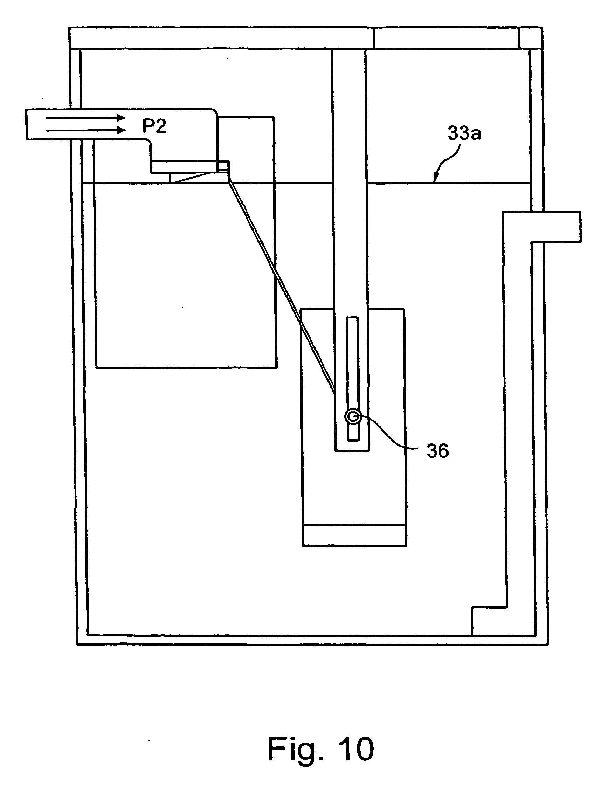

Figur 10 zeigt die Situation kurz nach der Situation gemäß Figur 9, wonach durch weiteres Absinken des Schwimm-Tauchkörpers 34 die Zulaufsperrklappe 39 vollständig verschlossen gegen eine Umrandung der Zulauföffnung 8 andrückt. Der Arretierungskeil 40 befindet sich in einer noch nicht arretierenden Stellung, so dass erst durch weiteres Absinken aus der Position gemäß Figur 10 in die Position gemäß Figur 11 der Arretierungskeil 40, der mit dem Steuerseil 37 verbunden ist, in die gemäß Figur 11 arretierten Position verschoben wird. In der vollständig arretierten Position des Arretierungskeils 40 ist die Zulaufsperrklappe 39 unten am Fallrohr in seiner Schließstellung arretiert.

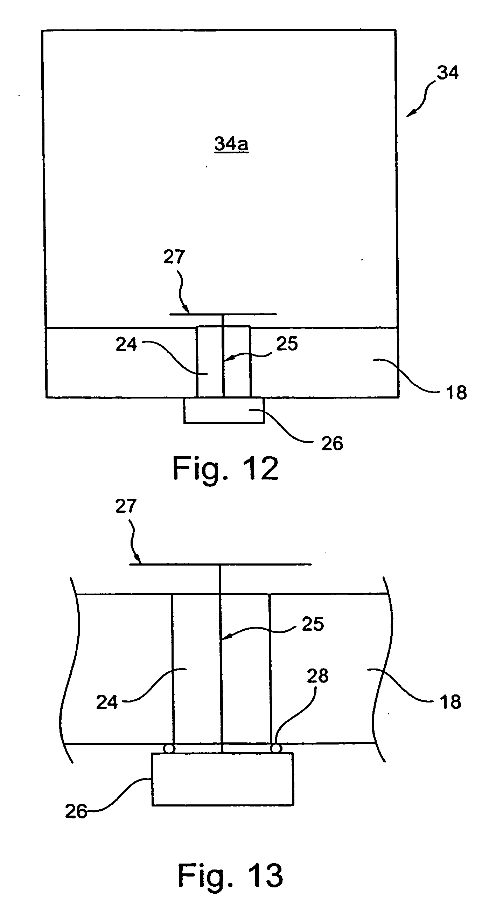

Eine alternative Anordnung zeigt Figur 12 und Figur 13, die einen leeren Schwimm-Tauchkörper 34 ohne Bolzen 15, Stange 12 und Verschlusselement 11 zeigen. In der Bodenscheibe 18 ist ein Durchgangsloch 24 gebildet, durch welches eine Verbindungsstange 25 reicht. Die Verbindungsstange 25 verbindet einen unterhalb der Bodenscheibe 18 befindlichen Schwimmkörper 26 mit einer innerhalb des Schwimm-Tauchkörpers 34 befindlichen Arretierungsstange 27. Wie vergrößerte Figur 13 verdeutlicht, ist bei geschlossenem Durchgangsloch 24 unterseitig an der Bodenscheibe 18 eine Gummidichtung 28 bzw. ein zum Durchgangsloch 24 durchmessergrößerer O-Ring zwischen dem Schwimmerkörper 26 und der Bodenscheibe 18 vorhanden, so dass durch Auftrieb des Schwimmerkörpers 26 das Durchgangsloch 24 dicht verschlossen wird und keine Flüssigkeit von unten durch das Durchgangsloch 24 ins Innenvolumen 34a gelangen kann.

Ein Leeren des Innenvolumens 34a des Schwimm-Tauchkörpers 34 bzw. ein Ablassen der darin vorhandenen Flüssigkeit erfolgt selbsttätig sobald im Behälter angestaute Flüssigkeit z. B. abgepumpt wird und der Schwimm-Tauchkörper 34 nicht mehr schwimmt und damit der Schwimmerkörper 26 keinen Auftrieb mehr erfährt. Durch das Eigengewicht der Verbindungsstange 25, der Arretierungsstange 27 und des Schwimmerkörpers 26 verschieben sich diese starr verbundenen Teile selbsttätig nach unten bis die Arretierungsstange 27 oben am Durchgangsloch 24 ansteht, so dass Flüssigkeit an der Arretierungsstange 27 vorbei vom Innenvolumen 34a über das Durchgangsloch 24 ins Behälterinnere 7 ablaufen kann. Dies erfolgt z. B. bei einem Kontrollvorgang bzw. bei Wiederinbetriebnahme in den Normalbetrieb des Behälters, also nachdem eine kritische Situation wie z. B. eine Aufstausituation behoben ist.

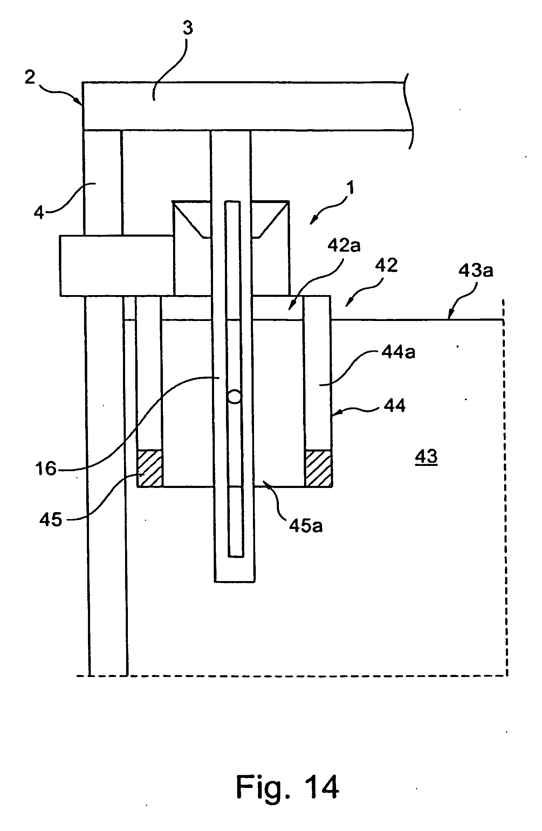

In den Figuren 14 bis 16 ist ein weiteres herkömmliches Ausführungsbeispiel mit einem Behälter 2, welcher eine selbsttätige Verschließvorrichtung 1 aufweist, dargestellt. Ein Schwimm-Tauchkörper 42 der Verschließvorrichtung 1 ist vom Grundaufbau entsprechend konstruiert wie der Schwimm-Tauchkörper 13 gemäß der Figuren 1 bis 8. Der Schwimm-Tauchkörper 42 ist oben offen und weist einen oben offenen und unten geschlossenen doppelwandigen Wandabschnitt 44 auf und eine ringförmige Bodenscheibe 45 mit einer mittigen Durchlassöffnung 45a. Der Schwimm-Tauchkörper 42 ist so austariert, dass der Schwimm-Tauchkörper 42 im leeren Zustand, also ohne Flüssigkeit in einem Innenvolumen 44a des Wandabschnitts 44, in einer umgebenden und sich im Behälter 2 befindenden Flüssigkeit, beispielsweise ein Abwassergemisch, gemäß der in Figur 14 gezeigten Position schwimmt. Ist gemäß Figur 14 im Wesentlichen nur eine wässrige Flüssigkeit 43 im Behälter 2 vorhanden, was z. B. kurz nach Inbetriebnahme eines Abscheiders in der Regel der Fall ist, ragt ein oberer Teil des Schwimm-Tauchkörpers 42 etwas über ein Flüssigkeitsniveau 43a der Flüssigkeit 43 über, z. B. um ca. 10 % seiner Gesamthöhe. Eine entsprechende Austarierung des Schwimm-Tauchkörpers 42 kann beispielsweise durch eine Höhe der ringförmigen Bodenscheibe 45 erfolgen.

Über einen nicht dargestellten Ablauf kann Flüssigkeit, die über ein Zulaufrohr 5 in den Behälter 2 gelangt, den Behälter 2 verlassen.

Wird der Behälter 2 als Durchlauf- bzw. Abscheidebehälter für ein Flüssigkeitsgemisch, das Anteile von Leichtflüssigkeit in einem wässrigen Abwassergemisch aufweist, eingesetzt, wird eine Betriebssituation erreicht, bei welcher eine Leichtflüssigkeit 46 auf der wässrigen Flüssigkeit 43 schwimmt. Eine Oberkante des Schwimm-Tauchkörpers 42 ist dabei noch etwas oberhalb eines Flüssigkeitsniveaus 46a der Leichtflüssigkeit 46, so dass diese nicht in das Innenvolumen 44a gelangen kann.

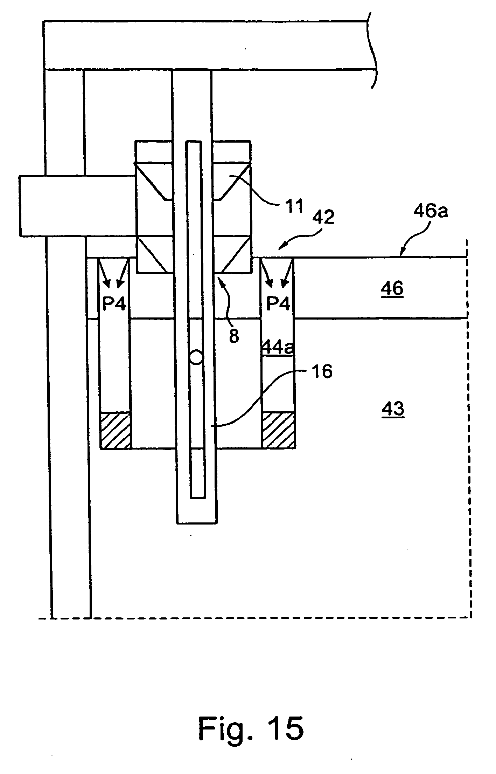

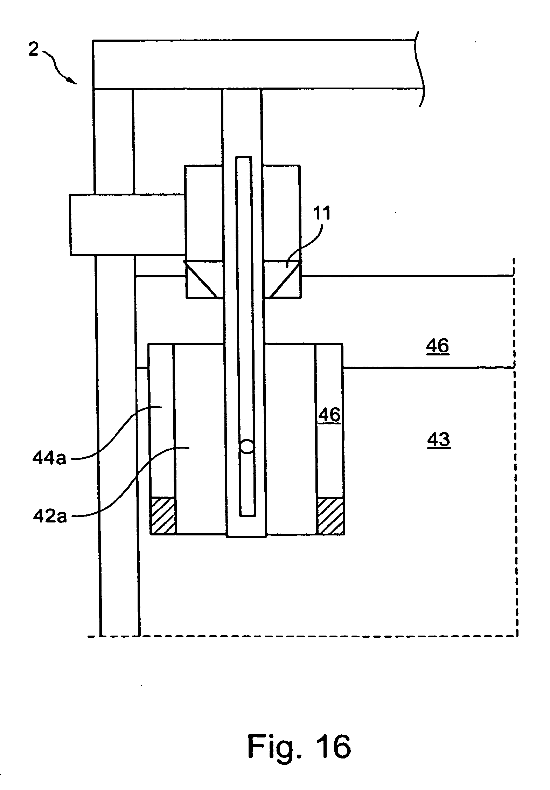

Mit weiterem Zulauf von Flüssigkeitsgemisch in den Behälter 2 erhöht sich die Schichtdicke der Leichtflüssigkeit 46 und durch die spezifische Austarierung des Schwimm-Tauchkörpers 42 gelangt der Schwimm-Tauchkörper 42 kurz bevor eine im Behälter 2 maximal zulässige Schichtdicke der Leichtflüssigkeit 46 erreicht wird, in die gemäß Figur 15 gezeigte Position. Dabei reicht ein Flüssigkeitsniveau 46a der Leichtflüssigkeit 46 bis an eine innere und äußere Oberkante des Wandabschnitts 44 des Schwimm-Tauchkörpers 42 heran, so dass Leichtflüssigkeit 46 gemäß der Pfeile P4 in das Innenvolumen 44a des Wandabschnitts 44 fließt. Der Wandabschnitt 44 füllt sich dabei mit Leichtflüssigkeit 46 und der Schwimm-Tauchkörper 42 bewegt sich durch seine höhere Gesamtmasse relativ zum Behälter 2 nach unten entlang einer Führungslasche 16 bis zur Position gemäß Figur 16 mit komplett flüssigkeitsgefülltem Wandabschnitt 44.

Mit dem Absinken des Schwimm-Tauchkörpers 42 wird gemäß der Anordnung aus den Figuren 1 bis 5 eine Zulauföffnung 8 am unteren Ende des Fallrohrs 6 durch ein am Schwimm-Tauchkörper 42 vorhandenes Verschlusselement 11 verschlossen (Figur 16).

Das Verschlusselement 11 ist entsprechend der Anordnung gemäß der Figuren 1 bis 5 mit dem Wandabschnitt 44 des Schwimm-Tauchkörpers 42 fest verbunden.

Durch die herkömmliche Anordnung gemäß der Figuren 14 bis 16 kann der austarierte Schwimm-Tauchkörper 42 eine Doppelfunktion erfüllen. Zum einen dient der Schwimm-Tauchkörper 42 als Zulaufsperre entsprechend der Anordnung gemäß der Figuren 1 bis 5, wenn also eine Aufstausituation herrscht, und zweitens dient er als selbsttätiger Abschluss eines Zulaufs im Normalbetrieb eines Behälters 2 einer Abscheideranlage, wenn die maximale Abscheide- bzw. Aufnahmekapazität für eine Leichtflüssigkeit erreicht ist, gemäß der Figuren 14 bis 16.

Dies ist insbesondere kostengünstig, da ein zusätzlicher ablaufseitiger selbsttätiger Abschluss entfallen kann.

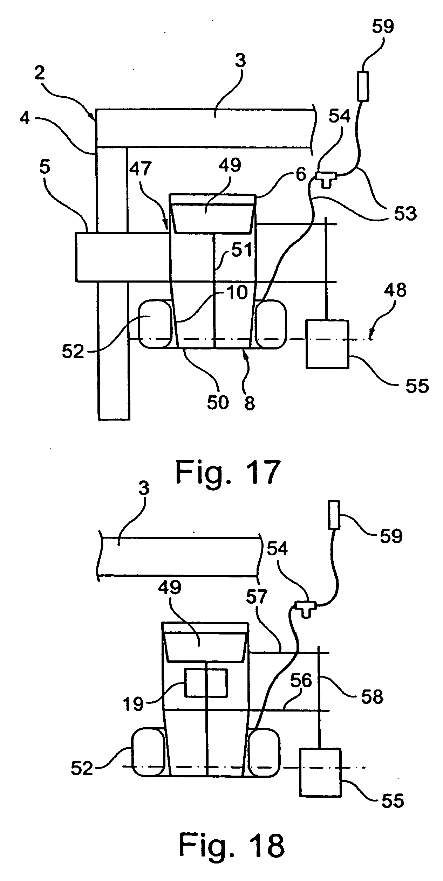

In den Figuren 17 und 18 ist ein erfindungsgemäßes Ausführungsbeispiel einer Aufstausicherung dargestellt. Das Zulaufrohr 5, welches durch die Wandung 4 des Behälters 2 durchtritt, mündet in ein Fallrohr 6 eines Strömungsverteilers 47. Das Fallrohr 6 hat im oberen Bereich einen größeren Durchmesser als das Zulaufrohr 5 und verjüngt sich bis zu seinem unteren Ende über einen konischen Abschnitt 10. Das untere Ende des Fallrohrs 6 weist eine Zulauföffnung 8 mit einem Durchmesser auf, welcher dem Durchmesser des Zulaufrohres 5 entspricht oder nur wenig größer ist.

So kann das ankommende Schmutzwasser das Fallrohr 6 im konischen Abschnitt 10 durch die mitgeführte grobe Fracht reinigen. Damit wird der Abschnitt 10, der innenseitig einen Ventilsitz für ein Verschlusselement 49 mit entsprechend konischer Außenform bildet, für eine absolut dichte Abdichtung durch das Verschlusselement 49 immer in einem sauberen und funktionsbereiten Zustand gehalten.

In den Figuren 17 und 18 ist eine Betriebssituation in einem Normalbetrieb mit einem Flüssigkeitsniveau 48 im Behälter 2 dargestellt.

Im Normalbetrieb gemäß Figur 17 und 18 ist das Verschlusselement 49 in geöffneter Position gehalten und oben im Zulaufrohr 5 platziert, wobei das Verschlusselement 49 über ein Verbindungsgestänge 51 und eine Stahlstrebe 50 mit einem Schwimmkörper 52 verbunden ist.

Der ringschlauchförmige Schwimmkörper 52 ist formveränderbar bzw. aufblasbar und gasgefüllt gezeigt, z. B. mit Druckluft, und besteht bevorzugt aus einem flexiblen bzw. folienartigen Material, beispielsweise aus einer Gummihaut mit einer kraftstoffbeständigen Beschichtung. Der Schwimmkörper 52 umgreift mit etwas Abstand das Fallrohr 6. Eine Versorgung mit Druckluft oder einem anderen Gas kann durch einen Druckschlauch 53 erfolgen, welcher vom Schwimmkörper 52 in dem Behälter 2 bis zu einer Druckversorgung 59 außerhalb des Behälters 2 führt und durch eine entsprechende Kupplung mit einem Ablassventil 54 versehen ist.

Entsprechend den vorgezeigten erfindungsgemäßen Ausführungsbeispielen weist auch das Fallrohr 6 eine Ventilanordnung 19 auf.

Seitlich beabstandet bzw. neben dem Zulaufverteiler bzw. dem Fallrohr 6 ist ein Steuerungsschwimmer 55 beweglich in vertikaler Richtung vorhanden. Der Steuerungsschwimmer ist derart austariert, dass er aufschwimmend mit einem Flüssigkeitsniveau 48 einer im Behälter 2 vorhandenen Flüssigkeit vertikal mitbewegt wird. Der Steuerungsschwimmer 55 ist an zwei waagrechten Streben 56, 57 am Fallrohr 6 vertikal bewegbar und verliersicher geführt. Hierzu ist oberhalb am Steuerungsschwimmer 55 eine Führungsstange 58 vorgesehen, welche in entsprechenden Aufnahmen am vorderen Ende der Streben 56, 57 gleiten kann. Über die Druckversorgung 59, beispielsweise eine Luftpumpe oder ein Druckluftkompressor, kann über den Druckschlauch 53 der Schwimmkörper 52 mit einem Druckgas bzw. Druckluft gefüllt werden.

Der variable Schwimmkörper 52 schwimmt im gasgefüllten Zustand entsprechend dem Flüssigkeitsniveau 48 und hält das Verschlusselement 49 im Normalbetrieb in seiner oberen Position im Zulaufrohr 5. Der Weg des Schwimmkörpers 52 nach oben ist durch Anlage der Stahlstrebe 50 an einer umlaufenden Unterkante des Fallrohres 6 begrenzt.

Der Steuerungsschwimmer 55 ist so tariert, dass er auf sämtlichen Flüssigkeiten, also auch auf Leichtflüssigkeiten, welche in den Behälter 2 einfließen können, aufschwimmt. Gegen ein nach unten Ausfädeln ist der Steuerungsschwimmer 55 über die Führungsstange 58 und die Streben 56, 57 gesichert, falls das Flüssigkeitsniveau 48 entsprechend unter dem in den Figuren 17, 18 gezeigten Niveau liegt.

Steigt nun in dem Behälter 2, beispielsweise durch eine Aufstausituation, das Flüssigkeitsniveau 48 an, bleibt der Schwimmkörper 52 samt Verschlusselement 49 in der oberen Position gemäß Figur 17, 18, jedoch steigt der Steuerungsschwimmer 55 nach oben, bis die Führungsstange 58 mit ihrem oberen Ende das selbsttätig schließende Ablassventil 54 erreicht und dieses betätigt bzw. öffnet, so dass aus dem variablen Schwimmkörper 52 Druckgas bzw. Druckluft über den Druckschlauch 53 und das geöffnete Ablassventil 54 entweichen kann. Dabei verringert der Schwimmkörper 52 seine Auftriebskraft und beginnt zu sinken, entsprechend dem Gewicht des Verschlusselements 49, des Verbindungsgestänges 51, der Stahlstrebe 50 und der Haut des Schwimmkörpers 52.

Damit erreicht das Verschlusselement 49 den konisch sich verjüngenden Abschnitt 10 des Fallrohrs 6 und verkeilt sich darin, wobei die Zulauföffnung 8 dicht verschlossen wird. Das schnelle Erreichen der Schließposition bzw. das kraftunterstützte Verkeilen wird durch das in den Behälter 2 einströmende Schmutzwassergemisch zudem verstärkt, da das einströmende bzw. anstehende Schmutzwasser von oben auf das Verschlusselement 49 drückt.

In diesem sicheren Zustand, was einen vermiedenen Aufstau angeht, muss der Behälter entleert und wieder in Betrieb genommen werden. Dabei sinkt der Steuerungsschwimmer 55 wieder und kommt so vom Ablassventil 54 frei, so dass dieses sich wieder schließt. Der Schwimmkörper 52 kann über die Druckversorgung 59 anschließend wieder mit Druckluft gefüllt werden. Des Weiteren kann über das Öffnen der bis dahin geschlossenen Ventilanordnung 19 wie bereits beschrieben das sich im Zulaufrohr 5 bzw. Fallrohr 6 angesammelte Abwassergemisch in das Behälterinnere abfließen. Wird nun der Behälter 2 wieder im Normalbetrieb mit Flüssigkeit gefüllt bzw. von dieser durchflossen, nehmen der Schwimmkörper 52, der Steuerungsschwimmer 55 und die Ventilanordnung 19 wieder die gemäß Figur 17, 18 gezeigten Positionen ein.

Besonders vorteilhaft ist auch, dass die Anordnungen gemäß der Figuren 17 bis 26 bei vorhandenen Anlagen bzw. Behältern ohne Verschließvorrichtung einfach nachrüstbar und diese somit mit einer Aufstausicherung versehen werden können. Insbesondere ist es vorteilhaft, dass dies auch bei nur sehr begrenzten Platzverhältnissen möglich ist. Grundsätzlich kann zudem über die Überwachung der Ventilstellung des Ablassventils 54 eine Überwachung des Betriebs der Abscheideeinrichtung bzw. des Behälters 2 bzw. eine damit verbundene rechtzeitige Warnung bei einer Aufstausituation über eine entsprechende Überwachungseinrichtung eingerichtet werden.

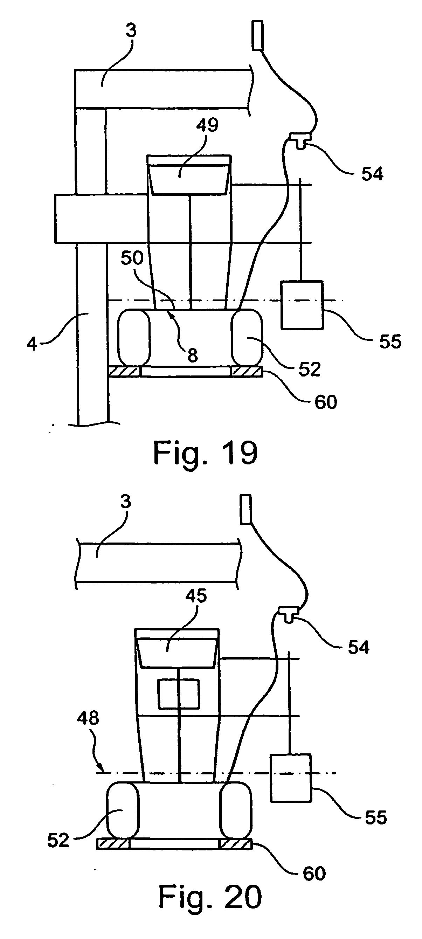

Eine zu den in den Figuren 17 und 18 alternative Anordnung zeigen die Figuren 19 und 20. Diese Anordnung unterscheidet sich zu der Anordnung gemäß Figur 17 und 18 dadurch, dass der Schwimmkörper 52 auf einer an der Wandung 4 befestigten Halterung 60 mit seiner Unterseite aufliegt. Dadurch wird das Ablassen des Druckgases aus dem Schwimmkörper 52 verbessert, da er zwischen der Stahlstrebe 50 und der Halterung 60 eingeklemmt wird. Bei einer Aufstausituation wird durch das Eigengewicht des Verschlusselements 59, der Stahlstrebe 50 und des Verbindungsgestänges 51 die Luft aus dem Inneren des Schwimmkörpers 52 über das durch den Steuerungsschwimmer 55 zuvor betätigte Ablassventil 54 herausgepresst.

Die Konstruktion gemäß der Figuren 19 und 20 kann auch in solchen Anlagensystemen vorteilhaft eingesetzt werden, in denen beispielsweise ein Schlammfang mit einem separaten Behälter vorgesehen ist. Hier muss nach einer Anlagenreinigung der Schlammfang nicht wieder befüllt werden, um die Zulaufsperre in Betrieb nehmen zu können. Nach einer Anlagenreinigung wird der Schwimmkörper 52 mit Gas bzw. Luft gefüllt und die Zulaufsperre geht automatisch in ihre freie Position, so dass das Abscheidesystem mit dem Behälter 2 sich wieder in einem funktionsfähigen Ausgangszustand befindet, bevor Flüssigkeit in den Behälter 2 fließt.

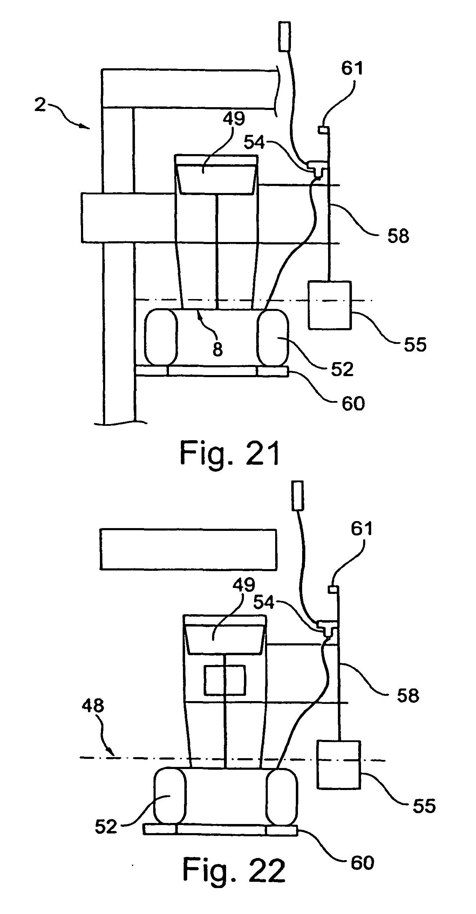

Eine weitere alternative erfindungsgemäße Anordnung zeigen die Figuren 21 und 22 (geöffneter Zustand einer Verschließvorrichtung in einem Behälter 2 mit unbetätigtem Ablassventil 54). Diese unterscheidet sich von der Anordnung gemäß Figuren 19 und 20 dadurch, dass der Steuerungsschwimmer gegenüber der nicht gezeigten Funktion gemäß der Figuren 17 bis 20 eine Zusatzfunktion aufweist. Der Steuerungsschwimmer 55 ist so austariert, wie ein normaler Funktionsschwimmer in einem selbsttätigen Abschluss z. B. in einem Leichtflüssigkeitsabscheider, er schwimmt also auf einer Abwasserflüssigkeit, sinkt jedoch in der Leichtflüssigkeit ab und sinkt dabei mit steigender Leichtflüssigkeitsschicht nach unten. Der Steuerungsschwimmer 55 folgt damit einer ggf. vorhandenen Trennschicht zwischen Abwasserflüssigkeit und darüber liegender Leichtflüssigkeit und bedient bei Erreichen einer maximal tolerierbaren Leichtflüssigkeitsschicht im Behälter 2 das Ablassventil 54. Dabei kommt z. B. eine Abwinkelung 61 am Ende der Führungsstange 58 in Kontakt mit dem Ablassventil 54 und öffnet dieses. Das geöffnete Ablassventil 54 führt zu einer Druckabsenkung im Schwimmkörper 52 durch ausströmende Druckluft, wobei mit dem Schwimmkörper 52 auch das Verschlusselement 49 bis zum vollständigen Verschließen der Zulauföffnung 8 absinkt.

Sämtliche Figuren 17 bis 22 zeigen jeweils in Seitenansicht und in einer dazu um 90 Grad gedrehten Ansicht den Betriebszustand bei offener Zulauföffnung 8, also ein zulaufoffener Normalzustand, in welchem sich der Schwimmkörper 52 in seiner obersten Stellung befindet und damit auch das Verschlusselement 49.

Vorteilhafterweise ist das Ablassventil 54 erfindungsgemäß immer oberhalb eines Flüssigkeitsniveaus im Behälter 2 positioniert, so dass das Ablassventil 54 nicht aufgrund von Verschmutzungen aus dem Abwasser bzw. durch eine darauf zurückzuführende Korrosion in seiner Funktion beeinträchtigt werden kann.

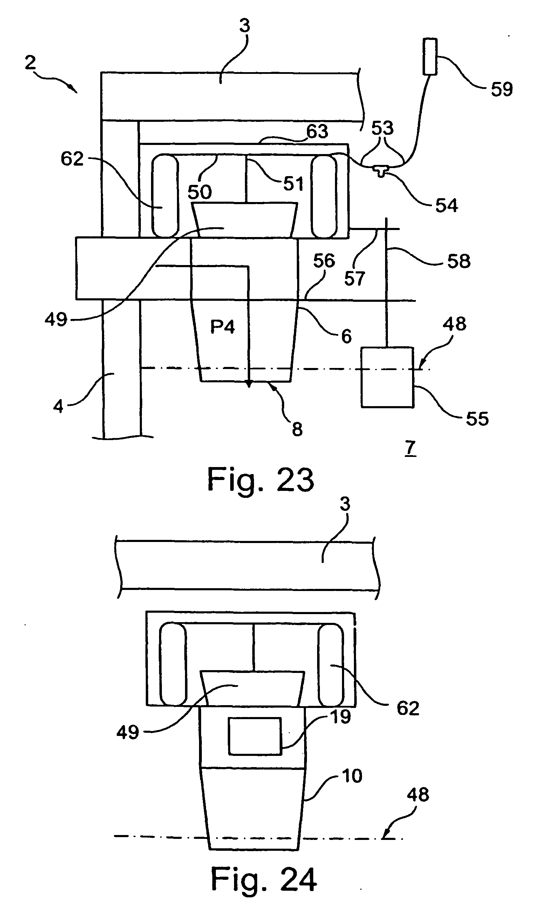

In den Figuren 23 bis 26 ist ein weiteres erfindungsgemäßes Ausführungsbeispiel einer Verschließvorrichtung bzw. einer Zulaufsperre dargestellt. Dabei umfasst diese Anordnung bekannte Funktionsbauteile aus den Figuren 17 bis 22. Ein ringförmig ausgebildeter Schwimmkörper 62 ist in einem Zulaufgehäuse 63 untergebracht, welches nach unten in ein Fallrohr 6 übergeht. Im Zulaufgehäuse 63 ist ein Verschlusselement 49 untergebracht, welches über ein Verbindungsgestänge 51 und eine Stahlstrebe 50 mit dem Schwimmkörper 62 verbunden ist.

Außerdem ist entsprechend der Figuren 17 bis 22 ein Steuerungsschwimmer 55 über Streben 56, 57 vertikal geführt bewegbar und kann mit einem Ablassventil 54, welches über einen Druckschlauch 53 mit dem Schwimmkörper 62 verbunden ist, zusammenwirken. Der Schwimmkörper 62 kann über eine Druckversorgung 59 mit z. B. Druckgas bzw. Druckluft beaufschlagt werden.

Die Figuren 23 und 24 zeigen die geöffnete Position im Normalbetrieb bei einem Flüssigkeitsniveau 48, wobei der Steuerungsschwimmer 55 beabstandet ist vom Ablassventil 54. Die Zulauföffnung 8 ist offen, so dass gemäß des Pfeils P4 (Figur 23) Abwasser in das Behälterinnere 7 des Behälters 2 zufließen kann.

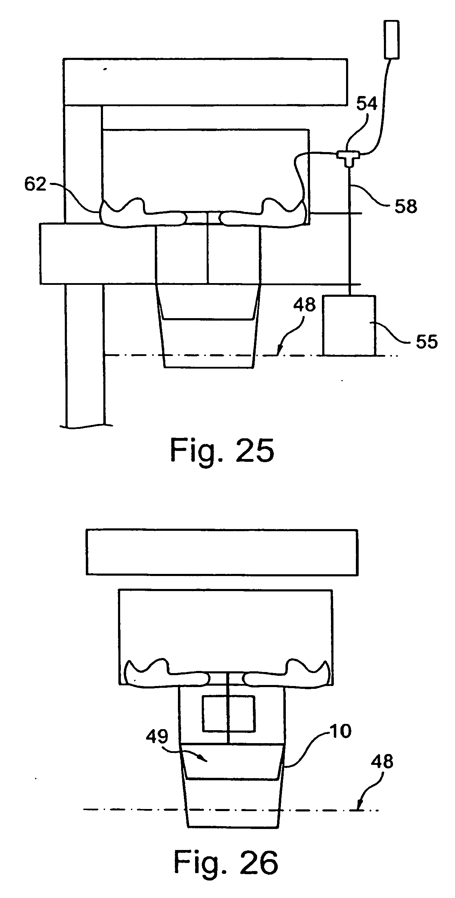

Wird nun gemäß Figur 25, 26 bei steigendem Flüssigkeitsniveau 48 der Steuerungsschwimmer 55 nach oben bewegt, öffnet das obere Ende der Führungsstange 58 das Ablassventil 54 und der Schwimmkörper 62 wird zusammengedrückt, wodurch das Verschlusselement 49 sich nach unten bewegt und die Zulauföffnung 8 im konisch sich verjüngenden Abschnitt 10 verschließt. Ein besonderer Vorteil liegt darin, dass der Schwimmkörper 62 nur zeitweise bzw. nur in vergleichsweise kurzen Zeitspannen nach dem Schließen der Zulaufsperre mit Abwasser in Berührung kommt. Dies verlängert die Lebensdauer des Schwimmkörpers 62.

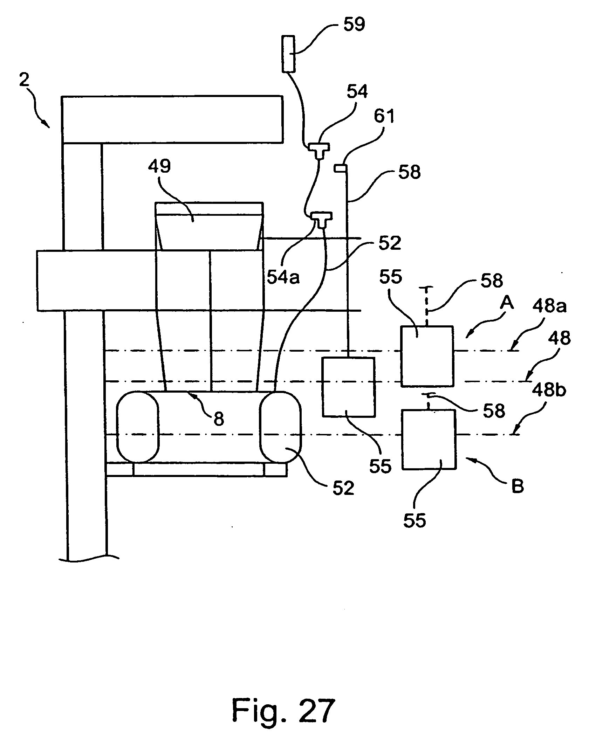

Figur 27 zeigt eine zu den in den Figuren 19 bis 22 dargestellten Anordnungen abgewandelte Anordnung mit einem Steuerungsschwimmer 55, der so austariert ist, dass er auf bzw. in Abwasser schwimmt, jedoch in einer Leichtflüssigkeit absinkt. Der Steuerungsschwimmer 55 kann in den Schwimmstellungen A und B (zur besseren Darstellung nur teilweise gezeigt und seitlich zur realen Position versetzt) mit zwei Ablassventilen 54 und 54a zusammenwirken und führt dabei jeweils zu einem Verschließen der Zulauföffnung 8 mit dem Verschlusselement 49, wie es oben bereits erklärt ist. Der Schwimmkörper 52 ist dabei über einen Druckschlauch 52, entlang dem die beiden Ablassventilen 54 und 54a vertikal beabstandet integriert sind, mit einer Druckversorgung 59 verbunden.

Der Steuerungsschwimmer 55 schwimmt in den drei unterschiedlichen Stellungen auf den unterschiedlichen Flüssigkeitsniveaus 48, 48a und 48b eines wässrigen Abwassers. Die obere Stellung A des Steuerungsschwimmers 55 mit der nur angedeuteten Führungsstange 58 gemäß dem im Behälter herrschenden Flüssigkeitsniveaus 48a zeigt eine Situation bei Aufstausituation, die zu einer Betätigung des oberen Ablassventils 54 über die Abwinkelung 61 führt. Die untere angedeutete Stellung B ergibt sich gemäß dem im Behälter herrschenden tieferen Flüssigkeitsniveaus 48b einer Tennschicht zwischen einer Leichtflüssigkeit und einer wässrigen Abwasserschicht und zeigt eine Situation bei Erreichen einer maximal zulässigen Leichtflüssigkeitsschicht und stellt die selbsttätige Schwimmerverschluss-Funktion der Anordnung dar. Dabei wird das vertikal tiefere Ablassventil 54a betätigt. Die fest vorgegebenen Positionen der Ablassventile 54, 54a korrespondieren über den Steuerungsschwimmer 55 also mit dem zugehörigen maximalen Flüssigkeitsniveau bei Aufstau im Behälter bzw. einer maximal tolerierbaren Leichtflüssigkeitsschicht. Das Flüssigkeitsniveau 48b kann unter realen Bedingungen in seiner vertikalen Position auch von der gezeigten Position nach unten versetzt sein. Die dritte zwischen den Stellungen A und B liegende Stellung des Steuerungsschwimmers 55 auf dem Flüssigkeitsniveaus 48 zeigt eine normale Betriebssituation mit freier Zulauföffnung 8, ohne dass die Ablassventile betätigt werden.

Bei sämtlichen mit einem Steuerungsschwimmer 55 versehenen erfindungsgemäßen Anordnungen gemäß der Figuren 17 bis 26 kann die kombinierte Funktion gemäß der Anordnung aus Figur 27 alternativ realisiert sein.

### Bezugszeichenliste:

- 1: Verschließvorrichtung
- 2: Behälter
- 3: Deckelelement
- 3a: Öffnung
- 4: Wandung
- 5: Zulaufrohr
- 6: Fallrohr
- 6a: Öffnung
- 7: Behälterinnere
- 8: Zulauföffnung
- 9: Zulaufabschnitt
- 10: Abschnitt
- 11: Verschlusselement
- 11a: Außenabschnitt
- 12: Stange
- 13: Schwimm-Tauchkörper
- 14: Quersteg
- 15: Führungsbolzen
- 16: Führungslasche
- 16a: Führungsnut
- 17: Wandabschnitt
- 18: Bodenscheibe
- 19: Ventilanordnung
- 20: Klappe
- 21: Gelenk
- 22: Gummidichtung
- 23: Ventilsitz
- 24: Durchgangsloch
- 25: Verbindungsstange
- 26: Schwimmkörper
- 27: Arretierungsstange
- 28: Gummidichtung
- 29: Verschließvorrichtung
- 30: Boden
- 31: Ablauf
- 32: Ablaufrohr
- 32a: Austrittsabschnitt
- 33, 33a: Flüssigkeitsniveau
- 34: Schwimm-Tauchkörper
- 34a: Innenvolumen
- 35: Führungsschiene
- 35a: Führungsnut
- 36: Führungsbolzen
- 37: Steuerseil
- 38: Umlenkanordnung
- 39: Zulaufsperrklappe
- 40: Arretierungskeil
- 41: Flüssigkeit
- 42: Schwimm-Tauchkörper
- 43: Flüssigkeit
- 43a: Flüssigkeitsniveau
- 44: Wandabschnitt
- 44a: Innenvolumen
- 45: Bodenscheibe
- 45a: Durchlassöffnung
- 46: Leichtflüssigkeit
- 46a: Flüssigkeitsniveau
- 47: Strömungsverteiler
- 48: Flüssigkeitsniveau
- 48a, 48b: Flüssigkeitsniveau
- 49: Verschlusselement
- 50: Stahlstrebe
- 51: Verbindungsgestänge
- 52: Schwimmkörper
- 53: Druckschlauch
- 54, 54a: Ablassventil
- 55: Steuerungsschwimmer
- 56, 57: Strebe
- 57: Strebe
- 58: Führungsstange
- 59: Druckversorgung
- 60: Halterung
- 61: Abwinkelung
- 62: Schwimmkörper
- 63: Zulaufgehäuse
- 64: Verteilervorrichtung

## Patentansprüche

1. Vorrichtung zum selbsttätigen Verschließen eines Zulaufes eines Behälters (2) zur Aufnahme einer Flüssigkeit, die im Regelbetrieb des Behälters (2) in einer Zuflussrichtung zunächst einen Zulaufabschnitt (9) und anschließend eine Zulauföffnung (8) passiert und dem Behälter (2) zufließt, wobei Flüssigkeit über einen Ablauf (31) mit einem definierten Ablaufniveau (33) aus dem Behälter (2) abfließt, und wobei das selbsttätige Verschließen des Zulaufs bei einem Niveau (33a) der Flüssigkeit im Behälter erfolgt, das über dem Ablaufniveau (33) des Ablaufs liegt, mit einem im Regelbetrieb in der Flüssigkeit schwimmfähigen Schwimm-Tauchkörper (52, 62) und mit Verschlussmitteln, die ein Verschlusselement (49) umfassen, das abhängig von der Position des Schwimm-Tauchkörpers (52, 62) den Zulauf freigibt oder in einer Verschlussposition des Verschlusselements (49) den Zulauf verschließt wobei die Verschlussmittel derart ausgebildet sind, dass das Verschlusselement (49) im Zulaufabschnitt (9) durch eine Bewegung in Zuflussrichtung die Zulauföffnung (8) verschließt **dadurch gekennzeichnet, dass** der Schwimm-Tauchkörper (52, 62) formveränderbare Auftriebmittel umfasst, welche mit einem Gas befüllbar sind, so dass der Schwimm-Tauchkörper (52, 62) in der Flüssigkeit im Behälter (2) schwimmfähig ist, und wobei der Schwimm-Tauchkörper (52, 62) durch ein Ablassen zumindest eines Teils des Gases aus den Auftriebmitteln in der Flüssigkeit absenkbar ist.

2. Vorrichtung nach Anspruch 1, **dadurch gekennzeichnet, dass** ein in der Flüssigkeit schwimmfähiges Steuerungselement (55) vorhanden ist, welches abhängig von einem Flüssigkeitsniveau in dem Behälter (2) ein Ablassen des Gases aus den Auftriebmitteln bewirkt.

3. Vorrichtung nach Anspruch 1 oder 2, **dadurch gekennzeichnet, dass** die Verschlussmittel einen im Zulauf in Zuflussrichtung sich verjüngenden Abschnitt (10) umfassen, der auf einen Gegenabschnitt (11a) des Verschlusselements (11) abgestimmt ist, so dass in der Verschlussposition die Zulauföffnung (8) durch das Verschlusselement (11) dicht verschlossen ist.

4. Vorrichtung nach einem der vorhergehenden Ansprüche, **dadurch gekennzeichnet, dass** der Schwimm-Tauchkörper (13) starr mit dem Verschlusselement (11) gekoppelt ist.

5. Vorrichtung nach einem der vorhergehenden Ansprüche, **dadurch gekennzeichnet, dass** Arretiermittel mit einem Arretierelement (40) derart ausgebildet sind, dass nach dem Erreichen der Verschlussposition durch das Verschlusselement (39) durch ein weitergehendes Absinken des Schwimm-Tauchkörpers (34) das Arretierelement (40) in eine Arretierstellung bringbar ist, in welcher das Verschlusselement (39) in der Verschlussposition gesichert ist.

6. Vorrichtung nach Anspruch 5, **dadurch gekennzeichnet, dass** der Schwimm-Tauchkörper (34) über eine Seilzuganordnung (37, 38) mit dem Verschlusselement (40) gekoppelt ist.

7. Vorrichtung nach Anspruch 5 oder 6, **dadurch gekennzeichnet, dass** das Arretierelement (40) an einem Grundkörper des Verschlusselements (39) bewegbar aufgenommen ist.

8. Vorrichtung nach einem der vorhergehenden Ansprüche, **dadurch gekennzeichnet, dass** der Schwimm-Tauchkörper (34) becherartig mit einer nach oben gerichteten Schwimm-Tauchkörperöffnung ausgebildet ist.

9. Vorrichtung nach einem der vorhergehenden Ansprüche, **dadurch gekennzeichnet, dass** eine betätigbare Ventilanordnung (19) zum Durchlass einer in dem Zulaufabschnitt (9) in der Verschlussposition anstehenden Flüssigkeit in den Behälter (2) vorgesehen ist.

10. Vorrichtung nach einem der vorhergehenden Ansprüche, **dadurch gekennzeichnet, dass** Führungsmittel (15,16; 6, 11; 35, 36) vorgesehen sind, welche die Bewegung des Schwimm-Tauchkörpers (13, 34) in vertikaler Richtung vorgebbar begrenzen.

11. Vorrichtung nach einem der vorhergehenden Ansprüche, **dadurch gekennzeichnet, dass** eine Auslassanordnung (24 - 28) zum Abblassen von in dem Schwimm-Tauchkörper (13) aufgenommener Flüssigkeit vorhanden ist.

12. Vorrichtung nach einem der vorhergehenden Ansprüche, **dadurch gekennzeichnet, dass** die Verschlussmittel derart ausgebildet sind, dass bei einem im Behälter (2) herrschenden Flüssigkeitsniveau (46a), das dem definierten Ablaufniveau entspricht, wobei ein Anteil der Flüssigkeit eine Leichtflüssigkeit (46) umfasst, welche oberhalb einer weiteren Flüssigkeit (43) aufschwimmt, der Schwimm-Tauchkörper (42) durch Aufnahme von Leichtflüssigkeit (46) seine Schwimmfähigkeit in der Flüssigkeit verringert und absinkt und im Behälter (2) in der Flüssigkeit eintaucht, so dass mit dem Verschlusselement (11) der Zulauf selbsttätig verschließbar ist.

13. Vorrichtung zum Abscheiden einer Flüssigkeitskomponente (46) aus einer Flüssigkeit, insbesondere Leichtflüssigkeitsabscheider, **dadurch gekennzeichnet, dass** eine der oben genannten Vorrichtungen vorhanden ist.

## Claims

1. Device for the automatic closing of an intake of a container (2) for a fluid, which, in the normal operation of the container (2), first passes through one intake section (9) in one direction, and then passes through an intake opening (8), flowing into the container (2), whereby fluid flows via an outlet (31) with a defined outlet level (33) out of the container (2), and whereby the automatic closing of the intake occurs at a level (33a) of the fluid in the container that is above the outlet level (33) of the outlet, with a floating submersible body (52, 62) that is buoyant in the fluid in normal operation, and with closing means comprising a closing element (49), which, independently of the position of the floating submersible body (52, 62), releases the intake or, when the closing element (49) is in closed position, closes the intake, whereby the closing means are configured such that the closing element (49) in the intake section (9) closes the intake opening (8) by means of a movement in the direction of flow, **characterised in that** the floating submersible body (52, 62) comprises flotation devices capable of changing shape, which can be filled with a gas, such that the floating submersible body (52, 62) can float in the fluid in the container (2), and whereby the floating submersible body (52, 62) can be sunk in the fluid by releasing at least part of the gas from the flotation devices.

2. Device according to claim 1, **characterised in that** there is a control element (55) capable of floating in the fluid, which, depending on a fluid level in the container (2) causes a release of the gas from the flotation devices.

3. Device according to claim 1 or 2, **characterised in that** the closing means comprise a section (10) that tapers off in the direction of flow in the intake, which is coordinated with an opposite section (11a) of the closing element (11), such that, in the closed position, the intake opening (8) is hermetically closed by the closing element (11).

4. Device according to any of the foregoing claims, **characterised in that** the floating submersible body (13) is rigidly coupled with the closing element (11).

5. Device according to any of the foregoing claims, **characterised in that** locking means with a locking element (40) are configured such that, after the closing element (39) reaches the closed position, the locking element (40) can be brought into a locking position in which the closing element (39) is secured in the closed position by further sinking of the floating submersible body (34).

6. Device according to claim 5, **characterised in that** the floating submersible body (34) is coupled with the closing element (40) by means of a wire rope hoist assembly (37, 38).

7. Device according to claim 5 or 6, **characterised in that** the locking element (40) is attached in a movable fashion to a base body of the closing element (39).

8. Device according to any of the foregoing claims, **characterised in that** the floating submersible body (34) is cuplike in shape with a floating submersible body opening directed upward.

9. Device according to any of the foregoing claims, **characterised in that** an actuable valve assembly (19) is provided for the passage of a fluid waiting in the intake section (9) in the closed position into the container (2).

10. Device according to any of the foregoing claims, **characterised in that** guides (15, 16; 6, 11; 35, 36) are provided, which limit the vertical movement of the floating submersible body (13, 34) in a specifiable fashion.

11. Device according to any of the foregoing claims, **characterised in that** an outlet assembly (24 - 28) for releasing fluid taken into the floating submersible body (13) is present.

12. Device according to any of the foregoing claims, **characterised in that** the closing means are configured such that, at a fluid level (46a) in the container (2) corresponding to the defined outlet level, whereby a portion of the fluid comprises a light fluid (46), which rises above an additional fluid (43), the floating submersible body (42) reduces its buoyancy in the fluid by taking in light fluid, and sinks in the fluid in the container (2), such that the intake can automatically close with the closing element (11).

13. Device for separating a fluid component (46) from a fluid, in particular a light liquid separator, **characterised in that** one of the aforementioned devices is present.

## Revendications

1. Dispositif de fermeture automatique d'une alimentation d'un récipient (2) conçu pour contenir un liquide qui, dans une fonction de régulation du récipient (2) passe d'bord, dans une direction d'entrée, par une section d'alimentation (9) puis une ouverture d'alimentation (8) et s'écoule dans le récipient (2), le liquide s'écoulant hors du récipient (2) par une évacuation (31) avec un niveau d'évacuation (33) défini et la fermeture automatique de l'alimentation ayant lieu à un niveau (33a) du liquide dans le récipient, qui se trouve au-dessus du niveau (33) de l'évacuation, avec un flotteur - plongeur (52, 62) dans le liquide en fonctionnement de régulation et avec des moyens de fermeture comprenant un élément de fermeture (49), qui, indépendamment de la position du flotteur-plongeur (52, 62), libère l'alimentation ou, dans une position de fermeture de l'élément de fermeture (49), ferme l'alimentation, les moyens de fermeture étant conçus de façon à ce que l'élément de fermeture (49) ferme l'ouverture d'alimentation (8) dans la section d'alimentation (9) grâce à un mouvement dans la direction d'entrée, **caractérisé en ce que** le plongeur flottant (52, 62) comprend des moyens de sustentation à forme variable pouvant être remplis d'un gaz, de façon à ce que le flotteur-plongeur (52, 62) flotte dans le liquide contenu dans le récipient (2) et le flotteur-plongeur (52, 62) pouvant être abaissé dans le liquide grâce à une vidange d'au moins une partie du gaz hors des moyens de sustentation.

2. Dispositif selon la revendication 1, **caractérisé en ce qu'**un élément de commande (55) flottant dans le liquide est prévu, qui provoque, indépendamment du niveau de liquide dans le récipient (2), une vidange du gaz hors des moyens de sustentation.

3. Dispositif selon la revendication 1 ou 2, **caractérisé en ce que** les moyens de fermeture comprennent une section (10) se rétrécissant dans l'alimentation dans la direction d'entrée, qui est adaptée à une contre-section (11a) de l'élément de fermeture (11) de façon à ce que, dans la position de fermeture, l'ouverture d'alimentation (8) soit fermée de manière étanche par l'élément de fermeture (11).

4. Dispositif selon l'une des revendications précédentes, **caractérisé en ce que** le flotteur-plongeur (13) est couplé de manière rigide avec l'élément de fermeture (11).

5. Dispositif selon l'une des revendications précédentes, **caractérisé en ce que** des moyens de blocage avec un élément de blocage (40) sont conçus de telle sorte que, une fois la position de fermeture atteinte par l'élément de fermeture (39), un abaissement supplémentaire du flotteur-plongeur (34) permet d'amener l'élément de blocage (40) dans une position de blocage, dans laquelle l'élément de fermeture (39) est fixé dans la position de fermeture.

6. Dispositif selon la revendication 5, **caractérisé en ce que** le flotteur-plongeur (34) est couplé avec un élément de fermeture (40) par l'intermédiaire d'un système à câble de commande (37, 38).

7. Dispositif selon la revendication 5 ou 6, **caractérisé en ce que** l'élément de blocage (40) est logé de manière mobile sur un corps de base de l'élément de fermeture (39).

8. Dispositif selon l'une des revendications précédentes, **caractérisé en ce que** le flotteur-plongeur (34) est conçu sous la forme d'un godet avec une ouverture orientée vers le haut.

9. Dispositif selon l'une des revendications précédentes, **caractérisé en ce qu'**un système à soupapes (19) actionnable est conçu pour permettre à un liquide en attente dans la section d'alimentation (9), dans la position de fermeture, de s'écouler dans le récipient (2).

10. Dispositif selon l'une des revendications précédentes, **caractérisé en ce que** des moyens de guidage (15, 16 ; 6, 11 ; 35, 36) sont prévus, qui limitent de manière prédéterminée le mouvement du flotteur-plongeur (13, 34) dans la direction verticale.

11. Dispositif selon l'une des revendications précédentes, **caractérisé en ce qu'**un système de vidange (24 - 28) est prévu pour la vidange du liquide contenu dans le flotteur-plongeur (13).

12. Dispositif selon l'une des revendications précédentes, **caractérisé en ce que** les moyens de fermeture sont conçus de façon à ce que, lors d'un niveau de liquide (46a) dans le récipient (2) correspondant au niveau d'évacuation défini, une partie du liquide comprenant un liquide léger (46) qui flotte au-dessus d'un autre liquide (43), le flotteur-plongeur (42) réduise sa flottabilité par l'arrivée du liquide léger (46) et coule et plonge dans le récipient (2) dans le liquide, de façon à ce que l'élément de fermeture (11) puisse fermer automatiquement l'alimentation.

13. Dispositif de séparation d'un composant liquide (46) et d'un liquide, plus particulièrement un séparateur de liquide léger, **caractérisé en ce qu'**un des dispositifs mentionnés ci-dessus est prévu.
